# EUROPEAN PATENT SPECIFICATION

(11) **EP 3 741 211 B1**
(45) Date of publication and mention of the grant of the patent: **13.04.2022**
(21) Application number: 18901117.4
(22) Date of filing: 25.12.2018
(51) Int. Cl.: A01K 87/04, A01K 87/00

(54) **FISHING LINE GUIDE AND FISHING ROD EQUIPPED WITH SAME**
ANGELSCHNURFÜHRUNG UND DAMIT AUSGESTATTETE ANGELRUTE
GUIDE DE LIGNE DE PÊCHE ET CANNE À PÊCHE QUI EN EST ÉQUIPÉE

(30) Priority: 17.01.2018 JP 2018005465; 28.02.2018 KR 20180024643; 09.08.2018 KR 20180093077
(43) Date of publication of application: 25.11.2020
(73) Proprietor: Fuji Kogyo Co., Ltd., Shizuoka-shi, Shizuoka 422-8564 (JP)
(72) Inventor: OMURA, Kazuhito, Shizuoka-shi, Shizuoka 422-8564 (JP)
(74) Representative: EIP
(86) International application number: PCT/JP2018/047621
(87) International publication number: WO 2019/142622

(56) References cited:
- WO-A1-2011/102398
- WO-A1-2015/178174
- WO-A1-2015/178174
- JP-A- H09 172 914
- JP-A- 2011 223 920
- JP-Y2- H 077 726

## Description

### TECHNICAL FIELD

The present disclosure relates to a fishing line guide guiding a fishing line, and to a fishing rod including the same.

### BACKGROUND ART

To guide a fishing line when casting a fishing rig or when landing a fish, a fishing line guide is attached to a tubular rod of a fishing rod. The fishing line guide has: a guide ring through which a fishing line passes; a frame holding and supporting the guide ring; and an attachment portion coupled to the frame and attached to a tubular rod of a fishing rod.

A movable guide or a sliding guide is used in a so-called telescopic fishing rod among fishing rods. The movable guide is fixed to an outer peripheral surface of a tubular rod of a fishing rod through interference fit. The movable guide has an annular attachment portion through which the tubular rod of the fishing rod passes. The movable guide is movable along the tubular rod in the state where the tubular rod passes through the attachment portion. The movable guide is fixed to the tubular rod through interference fit between the attachment portion and the outer peripheral surface of the tubular rod.

By way of example of the movable guide, Japanese Patent Publication No. 4275457 (patent document 1) and Japanese Utility Model Application Publication No. 1995-7726 (patent document 2) disclose a movable guide including an annular attachment portion and a metallic frame. The annular attachment portion is fitted with a tubular rod. The metallic frame has an attachment ring which supports a guide ring and is fitted with the attachment portion. WO2011102398 discloses line guides for a fishing rod having sections formed integrally using a prepreg consisting of high-strength fibers.

### PRIOR ART DOCUMENTS

### Patent Document

Patent document 1: Japanese Patent Publication No. 4275457
Patent document 2: Japanese Utility Model Application Publication No. 1995-7726

### SUMMARY OF THE INVENTION

### Problem to be solved by the Invention

To install a movable guide in a telescopic fishing rod, an annular attachment portion of the movable guide is slid toward a rear end of the fishing rod. The tubular rod of the telescopic fishing rod has a tapering shape whose diameter gradually decreases toward a tip end of the fishing rod. Thus, the attachment portion may be fixed to the outer peripheral surface of the tubular rod at a location where an inner diameter of the attachment portion is equal to an outer diameter of the tubular rod. At this time, if the attachment portion is strongly pushed toward the rear end of the fishing rod, then the attachment portion is slightly deformed and the attachment portion may be fixed with the outer peripheral surface of the tubular rod through interference fit.

When a fishing rig is cast or a fish is landed, various external forces act on the frame coupled to the attachment portion. For example, if an external force is applied to the frame in a transverse direction of the fishing rod, the frame and the attachment portion may be rotated about the tubular rod. In that event, the movable guide loses its function of guiding a fishing line. However, the movable guide, which has the annular attachment portion and the frame coupled to the attachment portion by the attachment ring, does not have a sufficient rotation prevention strength that resists the force applied to the frame in the transverse direction. Therefore, the movable guide tends to be easily rotated about the tubular rod because of an impact carelessly applied to the frame by a user or because of an impact applied to the frame by a rock or a ground surface at a fishing place. The movable guide is not designed so as to have a high rotation prevention strength resisting the rotation about the tubular rod. Further, since the metallic attachment ring protrudes from the frame in the movable guide, the movable guide does not have a sufficient bending strength, and fails to smoothly untangle the line tangle of the fishing line that occurs in the movable guide.

The telescopic fishing rod may be used for fishing on a waterside, a seashore, a seashore rock, etc. The telescopic fishing rod for seashore rock fishing may have an overall length of 4.5m to 5.5m, and ten to fifteen movable guides may be generally attached to such a telescopic fishing rod. A lightweight fishing rod is advantageous in view of smoothly casting a fishing rig or easily landing a fish. To this end, the telescopic fishing rod requires lightweight movable guides. However, due to the metallic frame having the metallic attachment ring, the movable guide of a prior art does not cope with weight reduction.

Disclosed embodiments provide a fishing line guide that solves the aforementioned problems of the prior art.

### Means for Solving the Problem

There is provided, according to an embodiment, a fishing line guide that has a high rotation prevention strength that resists rotation about a tubular rod of a fishing rod. There is provided, according to an embodiment, a fishing line guide that has a sufficient strength and a light weight. There is provided, according to an embodiment, a fishing line guide that has an improved bending strength. There is provided, according to an embodiment, a fishing line guide that is capable of smoothly untangling the line tangle of a fishing line while having one or more of the above-described functions.

The invention relates to a fishing line guide which is attachable to a tubular rod of a fishing rod for guiding a fishing line. According to the invention, the fishing line guide includes: an attachment portion composed of a resin material and comprising an annular body to be fitted to an outer peripheral surface of the tubular rod; a guide ring through which a fishing line can pass; and a ring support composed of a metallic thin plate. The ring support is partially coupled to the attachment portion and supports the guide ring. The ring support includes a ring holding portion and a ring supporting portion. The ring holding portion has a ring holding hole to which the guide ring is coupled. The ring supporting portion is integrally formed with the ring holding portion, and is partially embedded in the annular body of the attachment portion to be coupled to the attachment portion. The ring supporting portion is bent at a first bending angle with reference to a first bending portion which extends to a lower end of the ring supporting portion in a downward direction toward the tubular rod in the ring supporting portion. A portion of the ring supporting portion, which is embedded in the annular body, includes a lower portion of the first bending portion.

In an embodiment, the first bending angle is 120 degrees to 170 degrees.

In an embodiment, a distance between a front end of the ring supporting portion and a rear end of the ring supporting portion along a central axis of the fishing rod, when the fishing line guide is attached to the tubular rod, is 0.5mm to 3mm.

In an embodiment, the ring holding portion is bent with respect to the ring supporting portion at a second bending angle toward a tip of the fishing rod, when the fishing line guide is attached to the tubular rod, with reference to a second bending portion which becomes a boundary between the ring holding portion and the ring supporting portion and is connected to the first bending portion. The second bending portion extends from one lateral end of the ring support to an opposite lateral end of the ring support and is convex toward the lower end of the ring supporting portion. A center point of the second bending portion is located below both end points of the second bending portion.

In an embodiment, the second bending angle is 15 degrees to 20 degrees.

In an embodiment, the second bending portion includes a pair of linear bending portions which extend from a connection point between the first bending portion and the second bending portion at an obtuse angle with respect to the first bending portion. An included angle between the pair of linear bending portions is 110 degrees to 120 degrees.

In an embodiment, the second bending portion includes a curved bending portion connected to the first bending portion.

In an embodiment, the first bending portion and the second bending portion may form a Y shape.

In an embodiment, the ring support includes a work-hardened portion which is formed within the ring support along the first bending portion and the second bending portion. The work-hardened portion has a yield point higher than that of the ring holding portion and the ring supporting portion.

In an embodiment, a lowermost end point of the ring holding hole is located below the both end points of the second bending point, and both lateral end edges of the ring supporting portion are inclined toward each other at an included angle of more than zero degree and less than or equal to 30 degrees.

In an embodiment, lateral end edges of the ring support include: a pair of first lateral end edges extending from the attachment portion in an upward direction and inclined so as to become gradually more away from each other; a pair of second lateral end edges respectively extending from the pair of first lateral end edges in the upward direction at an angle different from an inclination angle of the pair of first lateral end edges; and a pair of boundary portions each located between each of the pair of first lateral end edges and each of the pair of second lateral end edges. The pair of boundary portions are located at the both end points of the second bending portion or above the both end points of the second bending portion respectively. The pair of second lateral end edges are inclined toward each other at an included angle of more than zero degree and less than or equal to 30 degrees.

In an embodiment, the ring support has a pair of first openings which are located in the ring supporting portion outside the attachment portion and are formed to be perforated through the ring supporting portion symmetrically with respect to the first bending portion.

In an embodiment, the ring support has a pair of second openings which are located in the ring supporting portion inside the attachment portion and are formed to be perforated through the ring supporting portion symmetrically with respect to the first bending portion. The second openings are filled with the hardened resin material of the attachment portion.

In an embodiment, the ring support includes a reinforcing flange which protrudes from the ring holding portion and defines the ring holding hole at an inner peripheral surface of the reinforcing flange.

In an embodiment, the inner peripheral surface of the reinforcing flange includes: an annular fitting surface to which the guide ring is fitted; and a guide surface extending along the fitting surface and curved with respect to the fitting surface. The guide ring may be fitted from the guide surface to the fitting surface.

In an embodiment, the reinforcing flange has a plurality of fitting protrusions which are formed in the inner peripheral surface of the reinforcing flange and come into contact with an outer peripheral surface of the guide ring. The guide ring is fitted with the fitting protrusions with a clearance formed between the outer peripheral surface of the guide ring and the inner peripheral surface of the reinforcing flange.

In an embodiment, the attachment portion includes: an upper rib protruding from an upper end of the annular body in an radially outward direction; and a pair of lateral ribs located below a center of the annular body and protruding in the radially outward direction. The upper rib and the pair of lateral ribs extend to a rear end surface of the annular body in a rearward direction toward a butt of the fishing rod, when the fishing line guide is attached to the tubular rod, and the rear end surface of the annular body includes a rear end surface of the upper rib and rear end surfaces of the pair of lateral ribs.

In an embodiment, the upper rib has a width that widens from the rear end surface of the upper rib along a frontward direction toward the tip of the fishing rod, when the fishing line guide is attached to the tubular rod,.

Another aspect of the disclosed embodiments relates to a fishing rod including the fishing line guide of the above-described embodiment.

The fishing rod of an embodiment includes a plurality of tubular rods and the fishing line guide of the above-described embodiment which is attached to one of the tubular rods.

In an embodiment, the attachment portion of the fishing line guide has a first alignment marker and one of the tubular rods has a second alignment marker aligned with the first alignment marker.

### Effect of the Invention

According to the fishing line guide according to an embodiment, a rotation prevention strength of the fishing line guide can be improved due to the bending structure of the ring support. Further, due to the bending structure of the ring support, the bending strength and the overall strength of the fishing line guide can be improved. According to the fishing line guide according to an embodiment, the fishing line guide has a light weight while having the improved rotation prevention strength. According to the fishing line guide according to an embodiment, the fishing line guide smoothly untangles the line tangle of the fishing line while having the improved rotation prevention strength and the improved bending strength.

### BRIEF DESCRIPTION OF THE DRAWINGS

FIG. 1 shows one example of a fishing rod including a fishing line guide according to an embodiment of the present disclosure.
FIG. 2 is a perspective view showing a fishing line guide according to a first embodiment of the present disclosure.
FIG. 3 is an exploded perspective view of the fishing line guide shown in FIG. 2.
FIG. 4 is a plan view of the fishing line guide shown in FIG. 2.
FIG. 5 is a plan view showing an attachment portion shown in FIG. 2.
FIG. 6 is a right side view of the fishing line guide shown in FIG. 2.
FIG. 7 is a sectional view of the fishing line guide taken along the line 7-7 of FIG. 2.
FIG. 8 is a perspective view showing a ring support shown in FIG. 3.
FIG. 9 is a sectional view of the ring support taken along the line 9-9 of FIG. 8.
FIG. 10 is a right side view showing the ring support shown in FIG. 8.
FIG. 11 is a rear view showing the ring support shown in FIG. 8.
FIG. 12 is a perspective view showing a fishing line guide according to a second embodiment of the present disclosure.
FIG. 13 is a perspective view showing a fishing line guide according to a third embodiment of the present disclosure.
FIG. 14 is a right side view of the fishing line guide shown in FIG. 13.
FIG. 15 is a rear view of the fishing line guide shown in FIG. 13.
FIG. 16 is a front view of the fishing line guide shown in FIG. 13.
FIG. 17 is a perspective view showing a ring support shown in FIG. 13.
FIG. 18 is a sectional view of the fishing line guide taken along the line 18-18 of FIG. 13.
FIG. 19 is a perspective view showing a fishing rod to which a fishing line guide according to the third embodiment is attached.
FIG. 20 is a perspective view showing a fishing line guide according to a fourth embodiment of the present disclosure.
FIG. 21 is a right side view of the fishing line guide shown in FIG. 20.
FIG. 22 is a sectional view of the fishing line guide taken along the line 22-22 of FIG. 20.
FIG. 23 is a perspective view of a ring support shown in FIG. 20.
FIG. 24 is a longitudinal sectional view showing a guide ring and a ring support shown in FIG. 20.
FIG. 25A shows a test piece on which a bending test is conducted.
FIG. 25B shows a test piece on which a bending test is conducted.
FIG. 25C shows a test piece on which a bending test is conducted.
FIG. 25D shows a test piece on which a bending test is conducted.
FIG. 25E shows a test piece on which a bending test is conducted.
FIG. 25F shows a test piece on which a bending test is conducted.
FIG. 26 is a graph showing a result of a strength test.
FIG. 27A shows an example where a line tangle of a fishing line occurs in a fishing line guide according to an embodiment.
FIG. 27B shows an example where a line tangle of a fishing line occurs in a fishing line guide according to an embodiment.
FIG. 27C shows an example where a line tangle of a fishing line occurs in a fishing line guide according to an embodiment.
FIG. 27D shows an example where a line tangle of a fishing line occurs in a fishing line guide according to an embodiment.
FIG. 27E shows an example where a line tangle of a fishing line occurs in a fishing line guide according to an embodiment.
FIG. 27F shows an example where a line tangle of a fishing line occurs in a fishing line guide according to an embodiment.
FIG. 27G shows an example where the line tangle of a fishing line is untangled in a fishing line guide according to an embodiment.
FIG. 27H shows a ring support according to a comparative example in which the line tangle cannot be untangled.
FIG. 28 shows a ring support of a fishing line guide according to a fifth embodiment of the present disclosure.
FIG. 29 is a sectional view taken along the line 29-29 of FIG. 28.
FIG. 30A shows an example of manufacturing the ring support and the fishing line guide shown in FIG. 28.
FIG. 30B shows an example of manufacturing the ring support and the fishing line guide shown in FIG. 28.
FIG. 30C shows an example of manufacturing the ring support and the fishing line guide shown in FIG. 28.
FIG. 30D shows an example of manufacturing the ring support and the fishing line guide shown in FIG. 28.
FIG. 30E shows an example of manufacturing the ring support and the fishing line guide shown in FIG. 28.
FIG. 30F shows an example of manufacturing the ring support and the fishing line guide shown in FIG. 28.
FIG. 30G shows an example of manufacturing the ring support and the fishing line guide shown in FIG. 28.
FIG. 31 is a perspective view showing a fishing line guide according to a sixth embodiment of the present disclosure.
FIG. 32 is a perspective view showing a fishing line guide according to a seventh embodiment of the present disclosure.
FIG. 33 is a front view of the fishing line guide shown in FIG. 32.
FIG. 34 is a front view showing a variation example of the fishing line guide according to the seventh embodiment.
FIG. 35A shows an example where a line tangle occurs in the fishing line guide shown in FIG. 32.
FIG. 35B shows an example where a line tangle occurs in the fishing line guide shown in FIG. 32.
FIG. 35C shows an example where a line tangle occurs in the fishing line guide shown in FIG. 32.
FIG. 35D shows an example where a line tangle occurs in the fishing line guide shown in FIG. 32.
FIG. 35E shows an example where a line tangle occurs in the fishing line guide shown in FIG. 32.
FIG. 35F shows an example where the line tangle is untangled in the fishing line guide shown in FIG. 32.
FIG. 35G shows an example where the line tangle is untangled in the fishing line guide shown in FIG. 32.
FIG. 35H shows an example where the line tangle is untangled in the fishing line guide shown in FIG. 32.
FIG. 35I shows an example where the line tangle is untangled in the fishing line guide shown in FIG. 32.
FIG. 35J shows an example where the line tangle is untangled in the fishing line guide shown in FIG. 32.
FIG. 35K shows a fishing line guide according to a comparative example in which the line tangle cannot be untangled.
FIG. 36A is a perspective view showing a variation example of a ring support.
FIG. 36B is a perspective view showing a variation example of a ring support.
FIG. 36C is a perspective view showing a variation example of a ring support.

### MODES FOR CARRYING OUT THE INVENTION

Embodiments of the present disclosure are illustrated for the purpose of explaining the technical idea of the present disclosure. The scope of the rights according to the present disclosure is not limited to the embodiments presented below or the detailed descriptions of such embodiments.

All the technical terms and scientific terms in the present disclosure include meanings or definitions that are commonly understood by those of ordinary skill in the art unless otherwise defined. All terms in the present disclosure are selected for the purpose of describing the present disclosure more clearly, and are not selected to limit the scope of the present disclosure.

As used in the present disclosure, expressions such as "comprising", "including", "having", and the like are to be understood as open-ended terms having the possibility of encompassing other embodiments, unless otherwise mentioned in the phrase or sentence containing such expressions.

The singular expressions that are described in the present disclosure may have a plural meaning unless otherwise stated, which will be also applied to the singular expressions recited in the claims.

The expressions, such as "first," "second," etc., which are used in the present disclosure, are used to separate a plurality of elements, and are not intended to limit an order or importance of the elements.

In the present disclosure, the description that one element is "connected," or "coupled" to another element should be understood to indicate that one element may be directly connected, or coupled, to another element, or that one element may be connected, or coupled, to another element via a new element.

The direction indication term "frontward," "front" or the like used in the present disclosure means a direction toward a tip of a fishing rod, while the direction indication term "rearward, " "rear" or the like means a direction toward a butt of a fishing rod. Further, the direction indication term "upward, " "upper" or the like used in the present disclosure is based on a direction in which a guide ring is positioned with respect to an attachment portion, while the direction indication term "downward," "lower" or the like means a direction opposite to the upward or upper direction.

Descriptions are made hereinafter as to the embodiments with reference to the accompanying drawings. Like reference symbols in the accompanying drawings denote like or corresponding elements. Further, in the following descriptions on the embodiments, duplicate descriptions for the same or corresponding elements may be omitted. However, even if the descriptions of the elements are omitted, such elements are not intended to be excluded in any embodiment.

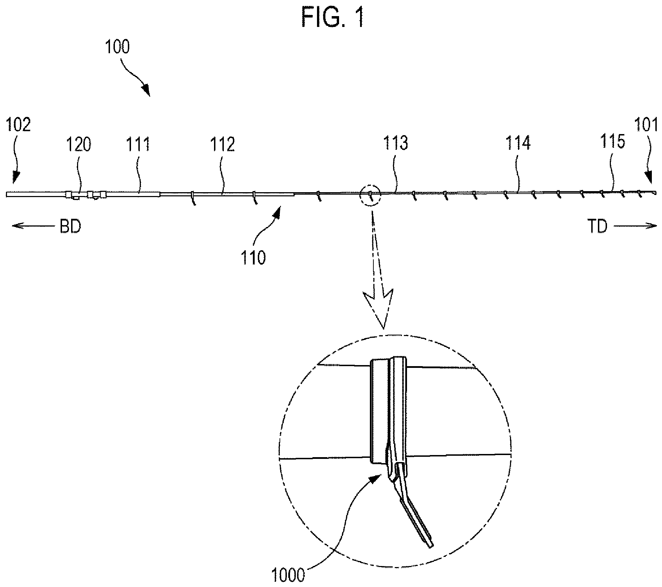

FIG. 1 shows an example of a fishing rod including a fishing line guide according to an embodiment of the present disclosure. In FIG. 1, an arrow TD indicates a frontward direction toward a tip 101 of the fishing rod, while an arrow BD indicates a rearward direction toward a butt 102 of the fishing rod. The fishing rod 100 shown in FIG. 1 may be referred to as a telescopic fishing rod in the art. The fishing rod 100 shown in FIG. 1 may be used for fishing on a waterside, a seashore, a boat, a seashore rock, or the like, but the places where the fishing rod 100 may be used are not limited to the aforementioned places.

Referring to FIG. 1, the fishing rod 100 includes a long cylindrical rod body 110. The rod body 110 serves as a structure which resists various external forces acting on the fishing rod 100 and maintains the shape of the fishing rod 100. The rod body 110 includes a plurality of tubular rods 111, 112, 113, 114, 115. A plurality of tubular rods are coupled to one another in such a telescopic manner that one tubular rod is inserted into another tubular rod located next to said one tubular rod and having an outer diameter greater than that of said one tubular rod, thereby constituting the rod body 110. FIG. 1 shows the extended rod body 110 of the fishing rod 100. The tubular rod 111, which is located at a rear end of the fishing rod 100 among the tubular rods of the rod body 110, serves as a base rod which a user can grip. A reel seat 120 is attached to the tubular rod 111, and a reel (not shown) for reeling out or winding a fishing line (not shown) is detachably attached to the reel seat 120.

The fishing rod 100 includes a plurality of fishing line guides at the rod body 110. The fishing line guides guide a fishing line which is reeled out from the reel when a fishing rig is cast, or which is wound around the reel when a fish is landed. One or more fishing line guides according to any one of the embodiments may be used as the plurality of fishing line guides. One or more fishing line guides according to any one embodiment may be attached to one of the tubular rods 111, 112, 113, 114, 115 of the rod body 110.

As shown in FIG. 1, the tubular rod 113 of the rod body 110 passes through an annular attachment portion of a fishing line guide 1000, and therefore the fishing line guide 1000 is attached to the rod body 110. Before the fishing line guide 1000 is attached to the rod body 110, the fishing line guide 1000 can be slid in a frontward direction TD or a rearward direction BD along the rod body 110 at the attachment portion thereof, and can be rotated about the rod body 110. The tubular rod 113 of the rod body 110 has a tapering shape whose outer diameter gradually decreases in the frontward direction TD. Accordingly, as the fishing line guide 1000 is moved in the rearward direction BD, the attachment portion of the fishing line guide 1000 is coupled to an outer peripheral surface of the tubular rod 113 with interference fit, and thus the fishing line guide 1000 may be attached to the rod body 110. The fishing line guide according to the embodiments may be referred to as a "movable guide" or a "sliding guide" in the art.

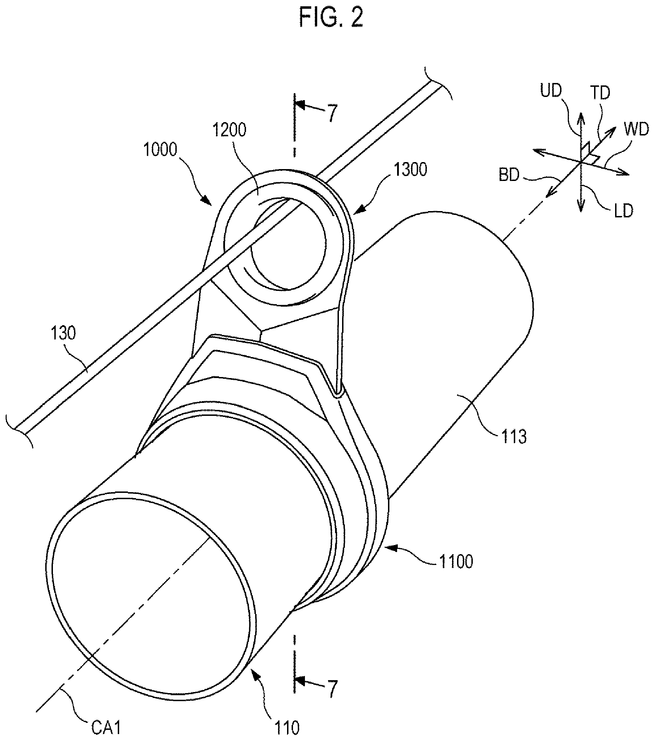

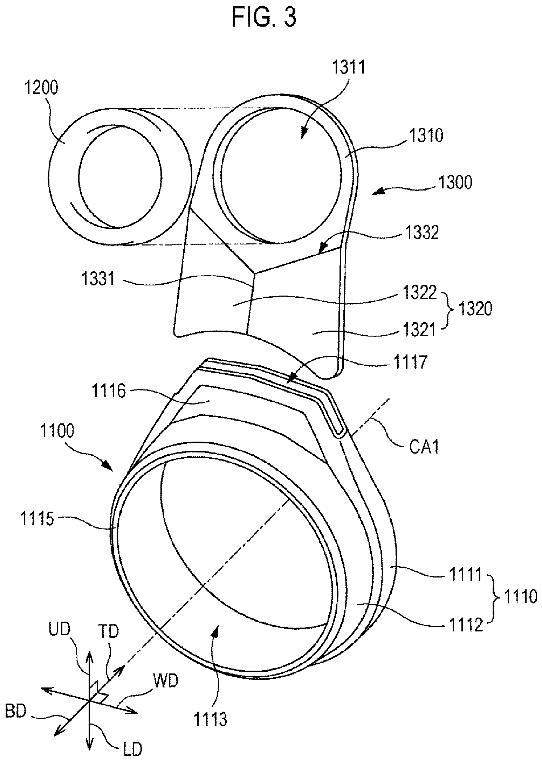

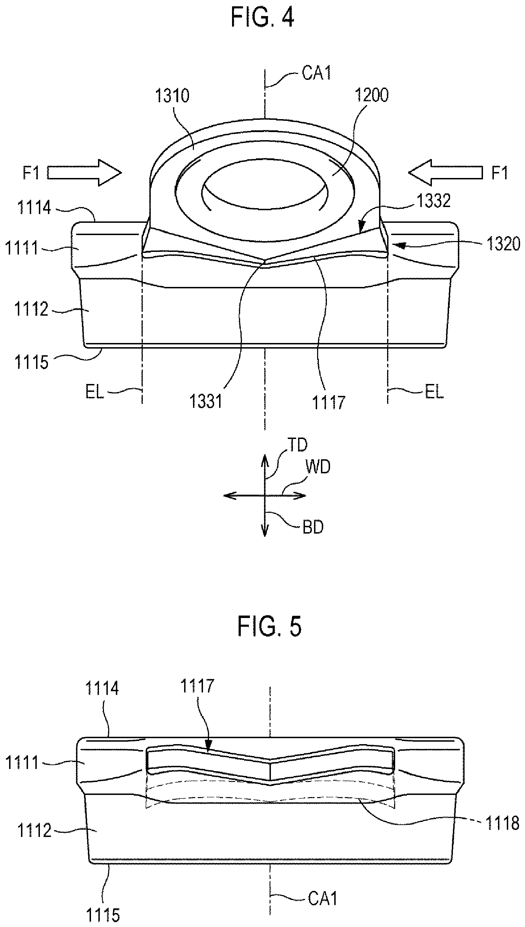

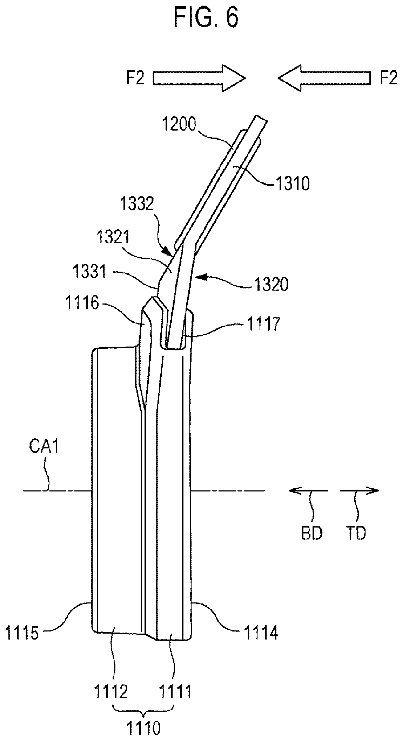

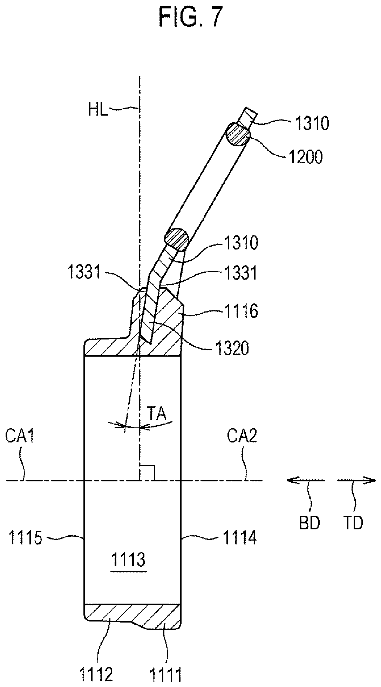

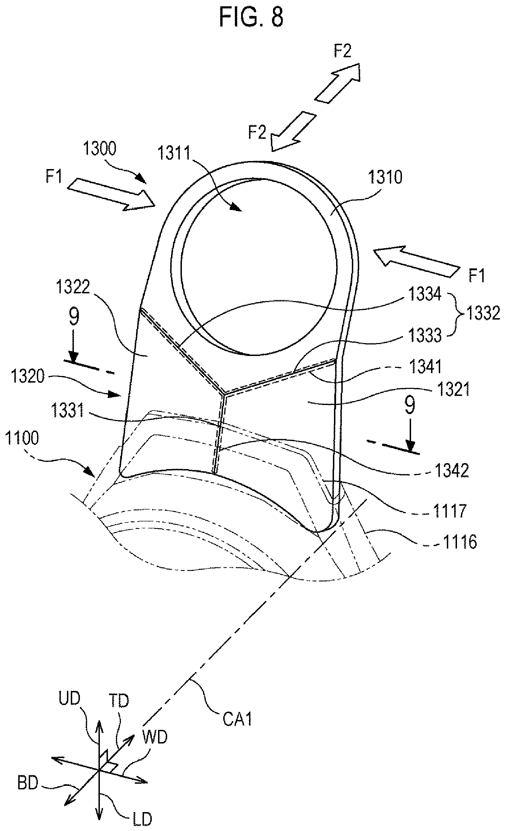

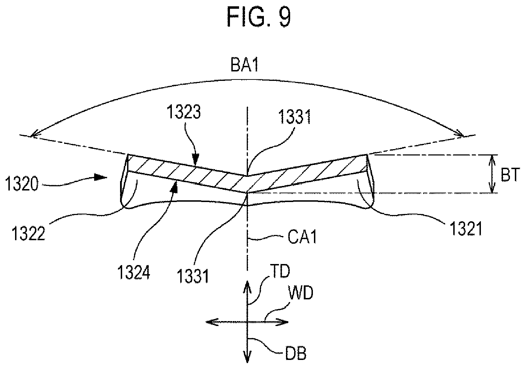

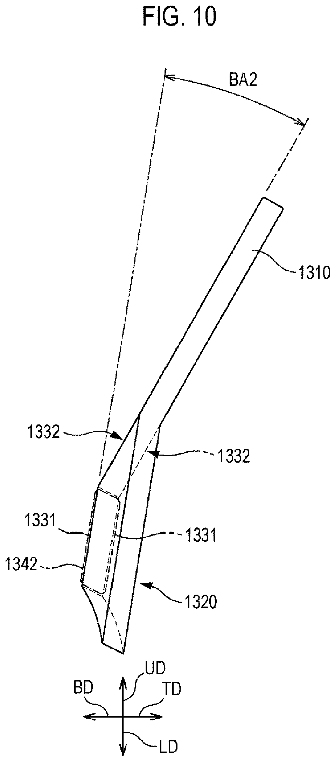

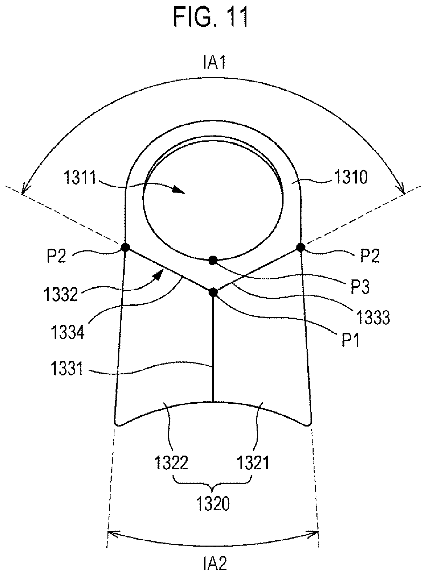

Reference is made to examples shown in FIGS. 2 to 11 to describe the fishing line guide according to a first embodiment of the present disclosure. FIG. 2 is a perspective view showing a fishing line guide according to the first embodiment. FIG. 3 is an exploded perspective view of the fishing line guide shown in FIG. 2. FIG. 4 is a plan view of the fishing line guide shown in FIG. 2. FIG. 5 is a plan view showing an attachment portion shown in FIG. 2. FIG. 6 is a right side view of the fishing line guide shown in FIG. 2. FIG. 7 is a sectional view of the fishing line guide which is taken along the line 7-7 of FIG. 2. FIG. 8 is a perspective view showing a ring support shown in FIG. 3. FIG. 9 is a sectional view of the ring support which is taken along the line 9-9 of FIG. 8. FIGS. 10 and 11 are a right side view and a rear view of the ring support shown in FIG. 8, respectively.

Referring to FIG. 2, the fishing line guide 1000 includes: an attachment portion 1100 attached to the rod body 110 of the fishing rod (specifically, one of the tubular rods constituting the rod body 110); a guide ring 1200 through which a fishing line 130 passes; and a ring support 1300 which holds and supports the guide ring 1200 and is partially coupled to the attachment portion 1100.

The attachment portion 1100 is composed of a resin material. Specifically, the attachment portion 1100 may be formed through injection molding that uses a carbon fiber reinforced resin material. More specifically, the attachment portion 1100 may be formed by injection molding a carbon long fiber reinforced resin material.

The carbon long fiber reinforced resin material has an impact strength that is 3 to 5 times higher than that of a carbon short fiber reinforced resin material. The carbon long fiber reinforced resin material has a high rigidity due to a high fiber-mixed amount, and has an excellent creep property at high temperature. The carbon long fiber reinforced resin material has a high elasticity retention rate at high temperature, and has an excellent impact retention rate at low temperature. The carbon long fiber reinforced resin material has a high dimensional stability due to a small bending deformation, a small tensile deformation and a low linear expansion coefficient, and has an excellent wear resistance. The carbon long fiber may have a length of about 7mm and a cylindrical shape. The content of carbon in the carbon long fiber reinforced resin material may be about 30%. The resin in the carbon long fiber reinforced resin material may be nylon resin.

As shown in FIGS. 2 and 3, the attachment portion 1100 has an annular shape, and the tubular rod 113 among the tubular rods of the rod body 110 can pass through the attachment portion 1100. The attachment portion 1100 comprises an annular body 1110 through which the tubular rod 113 can pass. A cylindrical bore 1113, to which the outer peripheral surface of the tubular rod 113 is fitted, is perforated through the annular body 1110 along a central axis CA1 of the fishing rod. A diameter of the bore 1113 may be uniform in the frontward direction TD or in the rearward direction BD. In the state where the tubular rod 113 passes through the bore 1113, the attachment portion 1100 can be slid along the tubular rod 113 and can be rotated about the tubular rod 113. The tubular rod 113 has a tapering shape that becomes gradually thinner in the frontward direction TD. Accordingly, while the annular body 1110 is moved in the rearward direction BD, the annular body 1110 can be fitted to the outer peripheral surface of the tubular rod 113 at a location where the outer diameter of the tubular rod 113 and the diameter of the bore 1113 are approximately equal to each other. Then, if the annular body 1110 is moved further in the rearward direction BD, the annular body 1110 is slightly deformed and, at the same time, the attachment portion 1100 can be firmly fitted and fixed to the tubular rod 113.

In an embodiment, as shown in FIGS. 3 and 4, the annular body 1110 has a large outer diameter portion 1111 and a small outer diameter portion 1112. The large outer diameter portion is located in the frontward direction TD and has a relatively large outer diameter. The small outer diameter portion is located in the rearward direction BD and has an outer diameter smaller than that of the large outer diameter portion 1111. The small outer diameter portion connects with the large outer diameter portion 1111. A radial thickness of the annular body 1110 at the large outer diameter portion 1111 is greater than a radial thickness of the annular body 1110 at the small outer diameter portion 1112. As shown in FIG. 4, a surface of the large outer diameter portion 1111 in the frontward direction TD defines an annular front end surface 1114 of the attachment portion 1100, and a surface of the small outer diameter portion 1112 in the rearward direction BD defines an annular rear end surface 1115 of the attachment portion 1100.

In an embodiment, as shown in FIG. 3, the annular body 1110 has a coupling portion 1116 that extends throughout a portion of a circumference of the large outer diameter portion 1111 and protrudes from the large outer diameter portion 1111 in a radially outward direction. A coupling slit 1117, which is formed from an outer surface of the coupling portion 1116 toward a center of the annular body 1110, is formed in the coupling portion 1116. A lower portion of the ring support 1300 and the coupling portion 1116 are coupled to each other, and therefore the ring support 1300 is partially coupled to the attachment portion 1100. The lower portion of the ring support 1300 is inserted or fitted into the coupling slit 1117, and therefore the ring support 1300 may be partially coupled to the attachment portion 1100. As shown in FIG. 5, the coupling slit 1117 has a bottom surface 1118 that is formed in a shape corresponding to a shape of a lower end edge of the ring support 1300. The coupling slit 1117 has a V-shaped cross-sectional shape that corresponds to a cross-sectional shape (see FIG. 9) of the lower portion of the ring support 1300. Further, the coupling slit 1117 is angularly bent at a center thereof at the same or almost the same angle as a bending angle of the ring support 1300. A length of the coupling slit 1117 in the axial direction CA1 is the same as or almost the same as a thickness of the lower portion of the ring support 1300. The coupling slit 1117 is inclined toward the tip of the fishing rod (in the frontward direction TD) at a tilt angle TA shown in FIG. 7.

The ring support 1300 may be fixed to the attachment portion 1100 by inserting and fitting the ring support 1300 into the coupling slit 1117 until the lower end edge of the ring support 1300 comes into contact with the bottom surface 1118 of the coupling slit 1117. The ring support 1300 and the coupling slit 1117 may be coupled to each other through clearance fit or transition fit, and may be coupled to each other by means of an adhesive. Further, the attachment portion 1100 and the ring support 1300 may be integrally formed through injection molding in which the ring support 1300 is used as an insert such that the lower portion of the ring support 1300 is embedded in the coupling portion 1116.

As shown in FIGS. 2 and 3, the guide ring 1200 has an approximately circular ring shape. The fishing line 130 may come into contact with an inner peripheral surface of the guide ring 1200. The guide ring 1200 may be coupled to the ring support 1300 through fitting and application of an adhesive. The guide ring 1200 may be composed of a ceramic material.

As shown in FIGS. 2 and 3, the ring support 1300 holds the guide ring 1200 and supports the guide ring 1200 with respect to the attachment portion 1100. In an embodiment, the ring support 1300 is composed of a thin plate that is manufactured from a metallic material such as stainless steel, stainless alloy, titanium alloy, pure titanium, etc. The ring support 1300 is formed as the thin plate in which portions constituting the ring support 1300 are bent or curved with respect to one another by a bending portion formed in the ring support. Further, the ring support 1300 may be formed by working a thin metal sheet (such a metal sheet may be referred to as a blank in the art), which is made of one of the aforementioned metallic materials, into said thin plate of the ring support 1300 through press working such as punching, blanking, or bending.

The ring support 1300 comprises: a ring holding portion 1310 that holds the guide ring 1200; and a ring supporting portion 1320 that supports the guide ring 1200 through the ring holding portion 1310. In the thin plate composing the ring support 1300, the ring supporting portion 1320 is integrally formed with the ring holding portion 1310. As shown in FIGS. 2 and 3, the ring support 1300, which holds and supports the guide ring 1200, is positioned with respect to the outer peripheral surface of the tubular rod 113 by the attachment portion 1100. The ring support 1300 and the attachment portion 1100 are coupled to each other in such a manner that the ring support 1300 is partially embedded in the attachment portion 1100. The coupling between the ring support 1300 and the attachment portion 1100 may be made through fitting and adhesive-bonding between the lower portion of the ring support 1300 (a lower portion of the ring supporting portion 1320) and the attachment portion 1100, or through injection molding the attachment portion 1100 by using the ring support 1300 as an insert.

As shown in FIG. 3, the ring holding portion 1310 has a ring holding hole 1311 to which the guide ring 1200 is coupled. The ring holding hole 1311 is perforated through the ring holding portion 1310 in a thickness direction of the ring holding portion 1310. The ring holding hole 1311 has a circular inner peripheral surface so as to fit with the outer peripheral surface of the guide ring 1200. The guide ring 1200 is fitted, at the outer peripheral surface thereof, to the inner peripheral surface of the ring holding hole 1311, and may be coupled to the inner peripheral surface of the ring holding hole 1311 by point contact or surface contact. Further, an adhesive for bonding the inner peripheral surface of the ring holding hole 1311 and the outer peripheral surface of the guide ring 1200 may be applied between the inner peripheral surface of the ring holding hole 1311 and the outer peripheral surface of the guide ring 1200. The ring holding portion 1310 has an approximately annular shape so as to hold the guide ring 1200 along the whole circumference of the guide ring 1200 by the ring holding hole 1311.

As shown in FIG. 3, an upper edge of the ring holding portion 1310 may have a semicircular shape or an approximately semicircular shape. When assuming a width direction WD of the fishing line guide that is perpendicular to both the frontward direction TD and an upward direction UD, lateral end edges of the ring holding portion 1310 in the width direction WD may be parallel with or almost parallel with each other. Alternatively, the lateral end edges of the ring holding portion 1310 in the width direction WD may become close to each other in the upward direction UD A lower end edge of the ring holding portion 1310 has a V shape that is convex in a downward direction LD, and the ring holding portion 1310 is integrally connected to the ring supporting portion 1320 at the lower end edge thereof. Therefore, the ring support 1300 does not include an opening or a cavity between the ring holding portion 1310 and the ring supporting portion 1320. To correspond to the shape of the lower end edge of the ring holding portion 1310, an upper end edge of the ring supporting portion 1320 has a V shape that is convex in the downward direction LD. The ring supporting portion 1320 is integrally connected to the ring holding portion 1310 at the upper end edge thereof.

As shown in FIGS. 2 and 3, the ring supporting portion 1320 is embedded in the attachment portion 1100 at the lower portion thereof. Lateral end edges of the ring supporting portion 1320 in the width direction WD may become close to each other in the upward direction UD Alternatively, the lateral end edges of the ring supporting portion 1320 in the width direction WD may be parallel with each other. A lower end edge of the ring supporting portion 1320 has a circular arc shape that is convex in the upward direction UD As shown in FIG. 4, both lateral surfaces of the ring supporting portion 1320 in the width direction WD are parallel with each other, and also are parallel with the central axis CA1 of the fishing rod. That is, imaginary extension lines EL, which respectively extend from the lateral surfaces of the ring supporting portion 1320 in parallel with the lateral surfaces, are parallel with the central axis CA1.

The ring support 1300 has a first bending portion 1331 that is formed in the ring supporting portion 1320. The first bending portion 1331 is positioned at a center or approximately the center of the ring supporting portion 1320 in the width direction WD. The ring supporting portion 1320 may be bent with reference to the first bending portion 1331 in a direction toward the tip of the fishing rod (e.g., the frontward direction TD) or in a direction toward the butt of the fishing rod (e.g., the rearward direction BD).

In this embodiment, the ring supporting portion 1320 is bent with reference to the first bending portion 1331 in the direction toward the tip of the fishing rod (e.g., the frontward direction TD). Therefore, as shown in FIG. 3, the ring supporting portion 1320 has a right half portion 1321 and a left half portion 1322 that have a symmetrical shape. The right half portion 1321 and the left half portion 1322 are integrally formed via the first bending portion 1331, and are inclined in the frontward direction TD so as to face toward each other.

As shown in FIGS. 3 and 4, the first bending portion 1331 extends in the downward direction LD toward the tubular rod 113 or passes through the center of the bore 1113, and an upper end of the first bending portion 1331 is positioned outside the coupling slit 1117. Further, a spacing between both ends of the lower edge of the ring supporting portion 1320 in the width direction WD is smaller than the diameter of the bore 1113 of the attachment portion 1100, and the both ends of the lower end edge of the ring supporting portion 1320 are positioned in the coupling portion 1116 of the attachment portion 1100.

In an embodiment, as shown in FIG. 3, the ring support 1300 has a second bending portion 1332 that is a boundary between the ring holding portion 1310 and the ring supporting portion 1320. The second bending portion 1332 is connected to the first bending portion 1331 approximately at a center thereof. The ring holding portion 1310 may be bent with respect to the ring supporting portion 1320 with reference to the second bending portion 1332 in a direction toward the tip of the fishing rod (e.g., the frontward direction TD) or in a direction toward the butt of the fishing rod (e.g., the rearward direction BD). In this embodiment, the ring holding portion 1310 is bent with reference to the second bending portion 1332 in the direction toward the tip of the fishing rod (e.g., the frontward direction TD).

As shown in FIGS. 6 and 7, in an embodiment, the ring support 1300 is tilted in the frontward direction TD at a tilt angle TA with respect to a vertical line HL that is perpendicular to the central axis CA1 of the fishing rod or a central axis CA2 of the attachment portion 1100.

The fishing line guide according to an embodiment has an improved bending strength of the ring support 1300, an improved rotation prevention strength of the ring support 1300, and an improved attachment strength of the ring support 1300. The bent shape of the ring support 1300 made by the above-described first and second bending portions may be related to such improved strengths. The aforesaid features of the fishing line guide according to an embodiment are described with reference to FIGS. 8 to 11.

The first bending portion and the second bending portion are merely shown in a shape of a simple line in FIGS. 8 to 11. In the embodiments of the fishing line guide, the first bending portion 1331 and the second bending portion 1332 may include portions that are curved at a certain curvature in the metallic thin plate composing the ring support 1300. To provide the ring support 1300 with strength-reinforced structure using the bent shape, the first bending portion 1331 and the second bending portion 1332 may have various widths. In an embodiment, on a front surface 1323 and a rear surface 1324 of the ring support 1300, the first bending portion 1331 may appear as one of the following shapes: a thin line, a narrow surface, a narrow curved surface, and a relatively wide curved surface. Further, when the cross-section of the ring support 1300 is taken, the first bending portion 1331 may appear as a circular arc shape that is convex in the rearward direction BD on the front surface 1323 and the rear surface 1324 of the ring support 1300. The second bending portion 1332 may appear as a thin line shape or a narrow surface shape on the front surface 1323 and the rear surface 1324 of the ring support 1300. When the longitudinal section of the ring support 1300 is taken, the second bending portion 1332 may appear as a circular arc shape that is convex in the rearward direction BD on the front surface 1323 and the rear surface 1324 of the ring support 1300.

As shown in FIG. 8, the ring support 1300 has the first bending portion 1331 which is formed in the ring supporting portion 1320 and divides the ring supporting portion 1320 into the right half portion 1321 and the left half portion 1322. The first bending portion 1331 extends in the ring support 1300 to the lower end of the ring supporting portion 1320 in the downward direction LD toward the central axis CA1 of the fishing rod (or in the downward direction toward the tubular rod to which the fishing line guide is attached). Further, the first bending portion 1331 extends from the central axis CA1 of the fishing rod approximately in the upward direction UD and meets the center of the second bending portion 1332. In an embodiment, as shown in FIG. 9, the ring supporting portion 1320 is bent at a first bending angle BA1 with reference to the first bending portion 1331 in the direction toward the tip of the fishing rod (the frontward direction TD).

As shown in FIG. 8, the ring support 1300 has the second bending portion 1332 which is a boundary between the ring holding portion 1310 and the ring supporting portion 1320 and through which the ring holding portion 1310 is bent. The second bending portion 1332 extends from one lateral end of the ring support 1300 to an opposite lateral end of the ring support 1300, and is convex toward the lower end of the ring support 1300 (the lower end of the ring supporting portion 1320). The ring holding portion 1310 and the ring supporting portion 1320 have a common edge. Therefore, in the ring support 1300, both the lower end edge of the ring holding portion 1310 and the upper end edge of the ring supporting portion 1320 form the second bending portion 1332. In an embodiment, the second bending portion 1332 has a V shape convex in the downward direction LD, and is connected to the upper end of the first bending portion 1331. Further, when the ring support 1300 is viewed from a lateral side, the second bending portion 1332 is inclined in an oblique direction between the frontward direction TD and the upward direction UD In some embodiments, the second bending portion 1332 may have a circular arc shape that is convex in the downward direction LD.

As shown in FIG. 8, the second bending portion 1332 includes a pair of linear bending portions 1333, 1334 that extend from a connection point between the first bending portion 1331 and the second bending portion 1332 (a center point P1 of the second bending portion 1332 shown in FIG. 11) at an obtuse angle with respect to the first bending portion 1331. As shown in FIG. 10, the ring holding portion 1310 is bent with reference to the second bending portion 1332 at a second bending angle BA2 with respect to the ring supporting portion 1320 in the direction toward the tip of the fishing rod (e.g., the frontward direction TD).

In an embodiment, as shown in FIG. 8, the first bending portion 1331 and the second bending portion 1332, which meet each other, form a Y shape, therefore forming a Y-shaped bending portion in the ring support 1300. Accordingly, the ring support 1300 may be formed by press-working the above-described metal sheet (blank) along the first bending portion 1331 and the second bending portion 1332. Specifically, the ring support may be formed through bending working the metal sheet (blank), that is, forming the first and second bending portions 1331, 1332 in the metal sheet, then bending the ring supporting portion 1320 at the first bending angle BA1 with reference to the first bending portion 1331, and thereafter bending the ring holding portion 1310 at the second bending angle BA2 with reference to the second bending portion 1332. Therefore, the ring support 1300 is formed as a metallic thin plate in which the ring holding portion 1310, the right half portion 1321 of the ring supporting portion 1320 and the left half portion 1322 of the ring supporting portion 1320 are bent toward one another. Further, in such a metallic thin plate, the ring holding portion 1310, the right half portion 1321 of the ring supporting portion 1320, and the left half portion 1322 of the ring supporting portion 1320 are integrally formed via the first and second bending portions 1331, 1332 that make the Y-shaped bending portion. And, in such a metallic thin plate, the ring holding portion, the right half portion of the ring supporting portion, and the left half portion of the ring supporting portion are bent toward one another by the first and second bending portions 1331, 1332.

Further, the above-described press-working for the metal sheet may be performed until the metal material composing the metal sheet is work-hardened. Therefore, as shown in FIG. 8, the ring support 1300 includes work-hardened portions 1341, 1342 which said metal material creates by being work-hardened by said press-working. The work-hardened portions 1341, 1342 have a shape corresponding to the Y shape of the first and second bending portions 1331, 1332. The work-hardened portions 1341, 1342 are formed within the ring support 1300 along the first bending portion 1331 and the second bending portion 1332. The work-hardened portions 1341, 1342 have a yield point higher than that of the ring holding portion 1310 and the ring supporting portion 1320 of the ring support 1300. Thus, it is difficult for the ring support 1300 to be plastically deformed at the first and second bending portions 1331, 1332 at which the work-hardened portions 1341, 1342 are created. Accordingly, due to the Y-shaped bending portion made by the first and second bending portions 1331, 1332, the ring support 1300 has a strong resistance against external forces applied to the ring support 1300, and the strength of the ring support 1300 can be reinforced.

As shown in FIG. 9, the ring supporting portion 1320 is bent with reference to the first bending portion 1331 at the first bending angle BA1 in the frontward direction TD. The first bending angle BA1 may be an obtuse angle of 120 degrees to 170 degrees. When the first bending angle BA1 is an obtuse angle, a crosswind-receiving area of the ring supporting portion 1320 can be decreased, and the bending of the fishing rod, which is caused due to a strong crosswind drag force, can be reduced. When the first bending angle BA1 is 120 degrees or more, the influence of a crosswind drag force on the ring supporting portion 1320 can be effectively reduced in the event of a strong crosswind. Further, when the first bending angle BA1 is 120 degrees or more, the area of the ring holding portion 1310, which is bent with respect to the ring supporting portion 1320, can be sufficiently secured in a simple shape. In case where the first bending angle BA1 exceeds 170 degrees, the work-hardening caused by compression may not occur in the first bending portion 1331 during bending the ring supporting portion 1320 with reference to the first bending portion 1331. In such a case, if an external force, which rotates the ring support 1300 about the tubular rod of the fishing rod, acts on the ring support 1300, the bent ring supporting portion 1320 tends to deform into a straight line shape in a vector direction of the external force, and therefore the ring support 1300 may be separated from the attachment portion 1100.

As shown in FIG. 9, a distance BT (the thickness of the bent ring supporting portion) between a front end of the ring supporting portion 1320 (a lateral end edge of the ring supporting portion 1320) and a rear end of the ring supporting portion 1320 (the first bending portion 1331 on the rear surface 1324) may be 0.5mm to 3mm along the central axis CA1. The attachment portion composed of a resin material tends to elastically deform, and may bend or deform because of little stress. In case where the distance BT is less than 0.5mm, when an external force is applied to the ring support 1300 in a direction of rotating the ring support 1300 about the central axis CA1 of the fishing rod (see arrows F1 in FIGS. 4 and 8), the coupling slit 1117 is pushed by the ring supporting portion 1320 and the surface of the coupling slit 1117 may be deformed. Then, a necessary reaction force does not act on the ring support 1300, and therefore the ring supporting portion 1320 may climb over the coupling slit 1117 and then be moved therefrom. In case where the distance BT exceeds 3mm, the ring support 1300 may become excessively bigger, and the weight reduction of the fishing line guide cannot be achieved. Further, a portion of the ring supporting portion 1320, which protrudes from the attachment portion 1100, may be severely influenced by a crosswind, thereby significantly deteriorating a heavy holding feeling of the fishing rod.

As shown in FIG. 10, the ring holding portion 1310 is bent with respect to the ring supporting portion 1320 with reference to the second bending portion 1332 at the second bending angle BA2 in the frontward direction TD. The ring holding portion 1310 is inclined with respect to the ring supporting portion 1320 at the second bending angle BA2 toward the tip of the fishing rod 100 (in the frontward direction TD). The second bending angle BA2 may be 15 degrees to 20 degrees in order to improve the bending strength of the ring support 1300 and smoothly untangle a line tangle.

By a user or an external impact, an external force F1 (see FIGS. 4 and 8), which rotates the ring support 1300 about the tubular rod 113 (about the central axis CA1 of the fishing rod), may be repeatedly applied to the ring support 1300. However, due to the Y-shaped bending portion of the ring support 1300, the ring support 1300 has an improved rotation prevention strength that resists the external force F1 applied to the tubular rod 113 in a transverse direction.

Referring to FIGS. 9 and 10, the ring supporting portion 1320 is bent with reference to the first bending portion 1331 at the first bending angle BA1 in the frontward direction TD toward the tip of the fishing rod. Therefore, the right half portion 1321 and the left half portion 1322 of the ring supporting portion 1320 are located obliquely at an acute angle with respect to the central axis CA1 with reference to the first bending portion 1331 and face toward each other. The ring holding portion 1310 is integrally formed with the ring supporting portion 1320, and is flat. The ring holding portion 1310 is bent with reference to the second bending portion 1332 at the second bending angle BA2 in the frontward direction TD toward the tip of the fishing rod. That is, the ring holding portion 1310 is angularly bent from the ring supporting portion 1320 through the second bending portion 1332. The lower end edge of the ring holding portion 1310 and the upper end edge of the ring supporting portion 1320 are formed as the V-shaped second bending portion 1332. With regard to the V shape of the second bending portion 1332, the linear bending portions 1333, 1334 of the second bending portion 1332 are inclined from the upper end of the first bending portion 1331 toward the upper end of the ring support 1300. That is, the respective upper end edges of the right half portion 1321 and the left half portion 1322 of the ring supporting portion 1320 are inclined in the width direction WD from the center of the ring support 1300 toward the upper end of the ring support 1300. The flat ring holding portion 1310 is connected to the respective upper end edges of the right half portion 1321 and the left half portion 1322 via the second bending portion 1332. As such, the ring support 1300 is provided with the Y-shaped bending portion that is formed by the first bending portion 1331 and the second bending portion 1332. Further, the Y-shaped work-hardened portions 1341, 1342 are formed within the ring support 1300 along the Y-shaped bending portion.

Therefore, although the external force F1 is applied to the ring support 1300, the ring support 1300 strongly resists against being deformed, bent or twisted in a direction in which the right half portion 1321 and the left half portion 1322 of the ring supporting portion 1320 are opened or closed. Further, since the ring support 1300 strongly resists the external force F1 due to the Y-shaped bending portion, the ring support 1300 has an improved rotation prevention strength. Accordingly, the ring supporting portion 1320 is prevented from expanding the coupling slit 1117 of the attachment portion 1100, being rotated about the attachment portion 1100 while climbing over the coupling slit 1117 of the attachment portion 1100, or being separated from the coupling slit 1117 of the attachment portion 1100.

An external force F2 (see FIGS. 6 and 8) may be applied to the ring support 1300 in the frontward direction TD toward the tip of the fishing rod or in the rearward direction BD toward the butt of the fishing rod. For example, the external force F2 may be applied to the ring support 1300 due to a fishing line during fishing or due to an external impact. However, the ring support 1300 has an improved bending strength that resists the external force F2. Due to the Y-shaped bending portion of the ring support 1300, the ring holding portion 1310 is prevented from being deformed or bent in a direction of the external force F2, or the right half portion 1321 and the left half portion 1322 of the ring supporting portion 1320 are prevented from being opened or bent in the direction of the external force F2. As such, the ring support 1300 has an improved bending strength that resists the external force F2.

To improve the bending strength and smoothly untangle the line tangle, each portion of the ring support 1300 may be formed in a specific dimensional range. Referring to FIG. 11, to improve the bending strength and smoothly untangle the line tangle, an included angle IA1 in the V shape of the second bending portion 1332 (i.e., an included angle between the linear bending portions 1333, 1334 shown in FIG. 8) may be 110 degrees to 120 degrees. The ring supporting portion 1320 may have a tapering shape such that the lateral end edges of the ring supporting portion 1320 are inclined toward each other. In such a case, to improve the bending strength and smoothly untangle the line tangle, an included angle IA2, which the lateral end edges of the ring supporting portion 1320 form, may have an angle of more than zero degree and less than or equal to 30 degrees. Further, the center point P1 of the second bending portion 1332 is located below both end points P2 of the second bending portion 1332, and a lowermost end point P3 of the ring holding hole 1311 is located below the both end points P2 of the second bending portion 1332, thereby contributing to the smooth untangling of the line tangle.

When the ring support 1300 is formed such that the first bending angle BA1, the second bending angle BA2, the included angle IA1 and the included angle IA2 have angle values within the above-described ranges, the line tangle in the ring support 1300 can be smoothly untangled. Further, the line tangle in the ring support 1300 can be smoothly untangled due to the above-described positional relationship of the center point P1 of the second bending portion 1332, the both end points P2 of the second bending portion 1332, and the lowermost end point P3 of the ring holding hole 1311. That is, when the first bending angle BA1, the second bending angle BA2, the included angle IA1 and the included angle IA2 are selected to have angle values deviating from the above-described ranges, or when the ring holding hole 1311 and the second bending portion 1332 are not positioned with the above-described positional relationship, the untangling of the line tangle cannot be smoothly performed. By way of example in the ring support 1300 of an embodiment, the first bending angle BA1 may be set to 157 degrees, the second bending angle BA2 may be set to 20 degrees, the included angle IA1 may be set to 120 degrees, and the included angle IA2 may be set to 20 degrees.

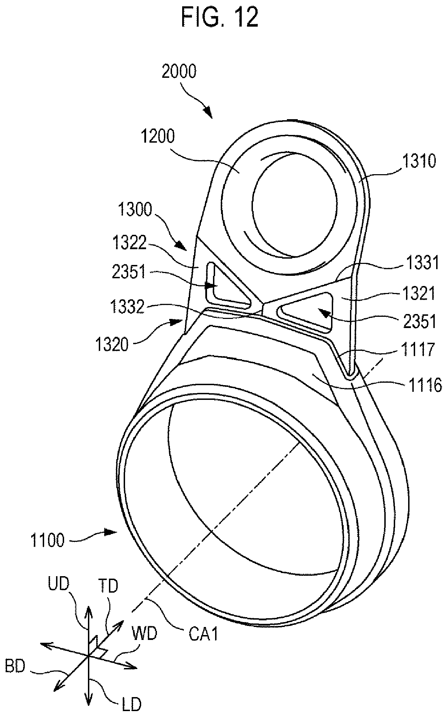

FIG. 12 is a perspective view showing a fishing line guide according to a second embodiment of the present disclosure. The fishing line guide 2000 shown in FIG. 12 has the same configuration as that of the fishing line guide 1000 of the above-described embodiment, except that an opening perforated in the thickness direction of the ring supporting portion is formed in an exposed portion of the ring supporting portion.

The ring support 1300 of the fishing line guide 2000 has first openings 2351 that are formed in the right half portion 1321 and the left half portion 1322 of the ring supporting portion 1320 respectively. The first opening 2351 is formed to be perforated through the ring supporting portion 1320 in the direction of the central axis CA1 of the fishing rod (in the thickness direction). Due to the first openings 2351, the fishing line guide 2000 can become more lightweight.

The first openings 2351 are formed symmetrically with respect to the first bending portion 1331, and have an approximately triangular shape. The first openings 2351 are located in the ring supporting portion 1320 outside the coupling portion 1116 of the attachment portion 1100. The first openings 2351 are formed only at a portion of the ring supporting portion 1320 located outside the coupling portion 1116, and are not formed at a portion of the ring supporting portion 1320 located within the coupling portion 1116. The first openings 2351 are formed not to overlap with an upper contour line of the coupling portion 1116, thus achieving the weight reduction of the ring support 1300 in the state where the coupling strength between the attachment portion 1100 and the ring support 1300 is maintained. Accordingly, when an adhesive is applied between the coupling portion 1116 and the ring supporting portion 1320, the coupling strength between the attachment portion 1100 and the ring support 1300 is prevented from being deteriorated because of separation of the adhesive at the upper contour line of the coupling slit 1117 which may be a starting point of the separation of the adhesive, and the ring support 1300 is prevented from corroding because of intrusion of seawater into the portion from which the adhesive is separated. Further, since each of the first openings 2351 is located not to overlap with the first bending portion 1331 of the ring supporting portion 1320, the strength of the ring supporting portion 1320 is not deteriorated. Further, since the first openings 2351 are located not to overlap with the second bending portion 1332, the Y-shaped bending portion of the ring support 1300 formed by the second bending portion 1332 and the first bending portion 1331 is not broken, and the strength of the ring support 1300 is not deteriorated.

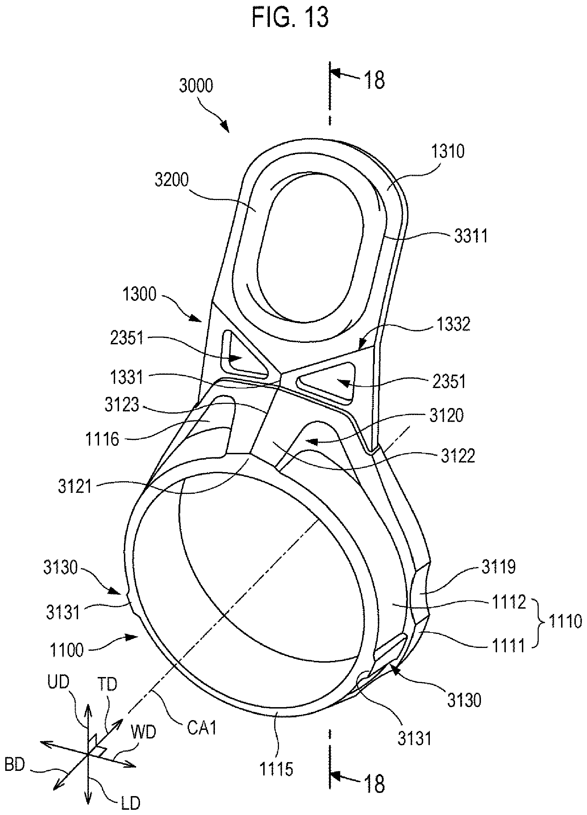

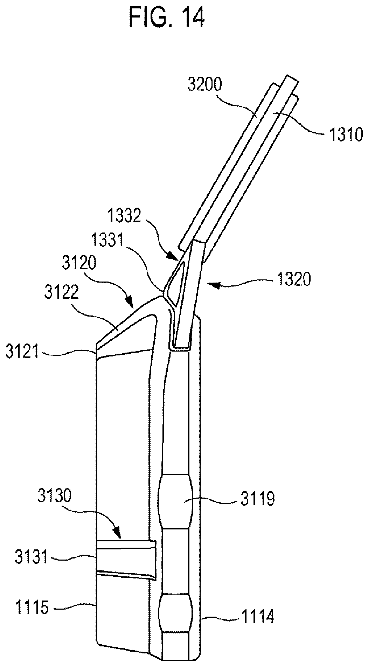

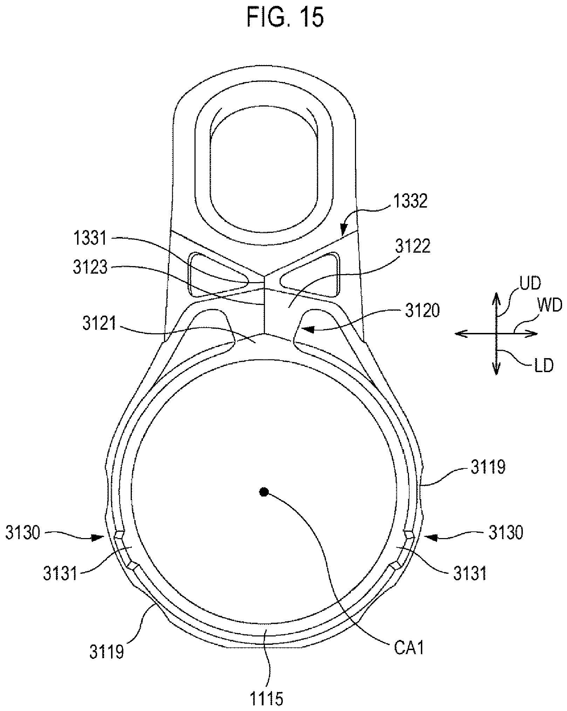

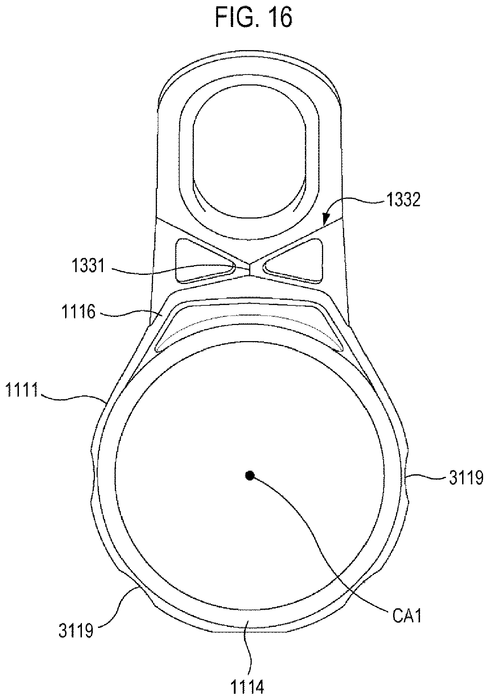

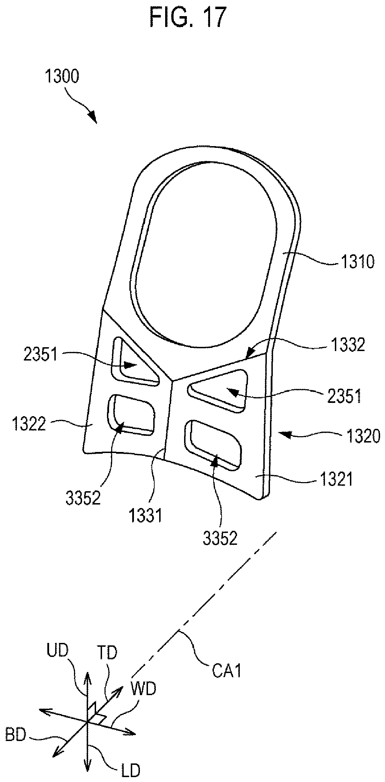

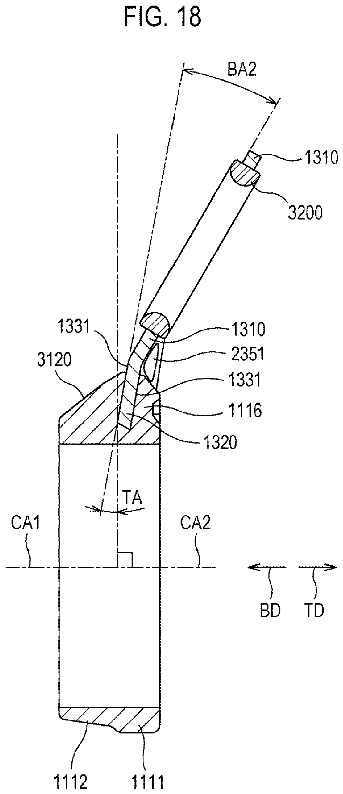

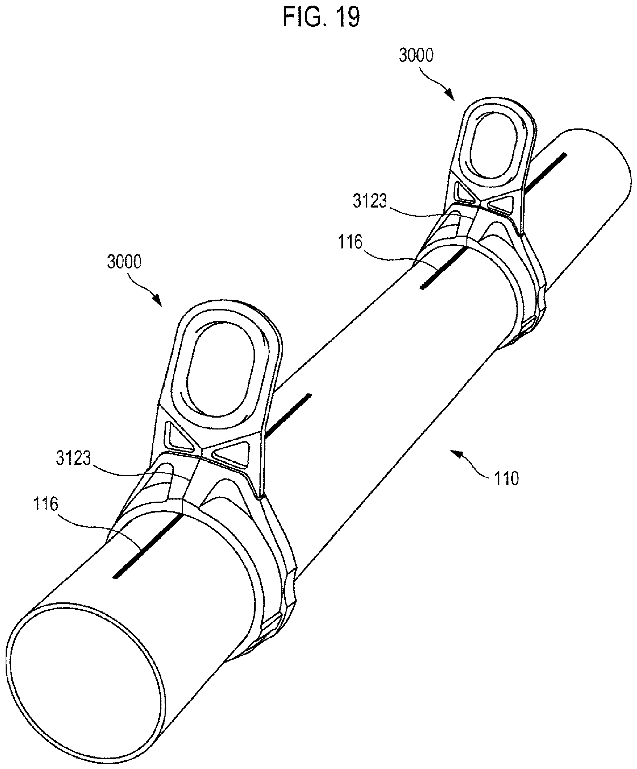

Reference is made to the examples shown in FIGS. 13 to 19 to describe a fishing line guide according to a third embodiment of the present disclosure. FIG. 13 is a perspective view showing a fishing line guide according to the third embodiment. FIGS. 14 to 16 are a right side view, a rear view and a front view of the fishing line guide shown in FIG. 13, respectively. FIG. 17 is a perspective view of a ring support shown in FIG. 13. FIG. 18 is a sectional view taken along the line 18-18 of FIG. 13. FIG. 19 is a perspective view showing a fishing rod to which a fishing line guide according to this embodiment is attached. The fishing line guide 3000 shown in FIGS. 13 to 19 has a configuration similar to those of the fishing line guides 1000, 2000 of the above-described embodiments. Hereinafter, descriptions are made as to configurations different between the fishing ling guide 3000 and the fishing line guides 1000, 2000 of the above-described embodiments.

The guide ring 3200, through which the fishing line passes, has an oblong shape that is long upward and downward. Therefore, the ring holding hole 3311, to which the guide ring 3200 is fitted, has an oblong shape to correspond to the shape of the guide ring 3200. The ring holding portion 1310 is inclined in the frontward direction TD toward the tip of the fishing rod. Thus, when the fishing rod is viewed from the butt of the fishing rod toward the tip of the fishing rod, the inner peripheral surface of the guide ring 3200 has an approximately circular shape. Therefore, a sufficient space for allowing the fishing line to smoothly pass can be secured in the guide ring 3200.

In the fishing line guide 3000 according to this embodiment, the ring support 1300 and the attachment portion 1100 may be integrally formed through insert injection molding. As shown in FIG. 13, the attachment portion 1100 of the fishing line guide 3000 includes, at an outer peripheral surface thereof, three ribs 3120, 3130 that protrude in a radially outward direction. Said three ribs include an upper rib 3120 and a pair of lateral ribs 3130.

The upper rib 3120 is located adjacent to the ring supporting portion 1320 and is located at an upper end of the annular body 1110. The upper rib 3120 is formed throughout the coupling portion 1116 and the small outer diameter portion 1112. An upper surface 3122 of the upper rib 3120 is inclined toward the central axis CA1. The upper rib 3120 has a shape that tapers in the rearward direction BD toward the butt of the fishing rod. Therefore, the upper rib 3120 has a width that gradually widens from a rear end surface 3121 in the rearward direction BD along the frontward direction TD toward the tip of the fishing rod.

The pair of lateral ribs 3130 are located below the center of the annular body 1110 at a lateral end of the annular body 1110. The pair of lateral ribs 3130 are formed throughout the large outer diameter portion 1111 and the small outer diameter portion 1112. A width of the lateral ribs 3130 is narrower than the width of the upper rib 3120. An angle between the upper rib 3120 and the lateral ribs 3130 with respect to the central axis CA1 may be, but is not limited to, approximately 120 degrees.

As shown in FIGS. 13 and 14, the upper rib 3120 and the lateral ribs 3130 extend to the rear end surface 1115 of the annular body 1110 in the rearward direction BD toward the butt of the fishing rod. Therefore, the rear end surface 3121 of the upper rib 3120 in the rearward direction BD and rear end surfaces 3131 of the lateral ribs 3130 in the rearward direction BD form the same surface together with the rear end surface 1115 of the annular body 1110. That is, in this embodiment, the rear end surface 1115 of the annular body 1110 in the rearward direction BD includes the rear end surface 3121 of the upper rib 3120 and the rear end surfaces 3131 of the lateral ribs 3130, and the rear end surface 3121 of the upper rib 3120 and the rear end surfaces 3131 of the lateral ribs 3130 form a portion of the rear end surface 1115 of the annular body 1110.

The upper rib 3120 and the lateral ribs 3130 improve the strength of the annular body 1110 in the circumferential direction of the annular body. The rear end surface 3121 of the upper rib 3120 and the rear end surfaces 3131 of the lateral ribs 3130 are located on the same surface as the rear end surface 1115 of the annular body 1110. Thus, cracks created from the rear end surface 1115 of the annular body 1110 and whitening in the rear end surface 1115, which may occur when the annular body 1110 is fitted with the tubular rod of the rod body 110, can be prevented. That is, the upper rib 3120 and the lateral ribs 3130 can increase the fitting strength of the annular body 1110.

Due to the presence of the upper rib 3120, when the attachment portion 1100 is molded, the resin materials composing the attachment portion 1100 can smoothly flow in a molding die for molding the attachment portion 1100, and weld line strength can be reinforced where the resin materials combine together. For example, rib formers, which have shapes corresponding to the upper rib 3120 and the lateral ribs 3130 and are positioned to correspond to the positions of the upper rib 3120 and the lateral ribs 3130, may be formed on a molding surface of the molding die for molding the attachment portion 1100. With regard to the insert injection molding, a gate, through which molten carbon long fiber reinforced resin materials enter the molding die, may be positioned at a lowermost end of the large outer diameter portion 1111 of the annular body 1110. Therefore, the resin, which flows in through the gate, is bifurcated into two flows. Then, the two resin flows may flow to the upper end of the annular body 1110 and then may combine together at the upper end of the annular body 1110. The annular body 1110 has the large outer diameter portion 1111 and the small outer diameter portion 1112 having different thicknesses. Thus, the resins, which pass the large outer diameter portion 1111 and the small outer diameter portion 1112, have difference in flow velocity. In addition, time lag occurs in the two resin flows which reach the upper rib 3120. Thus, the two resin flows can combine together in the vicinity of the upper rib 3120 while changing their flow directions. Moreover, due to the above-described shape of the upper rib 3120, the two resin flows can be disturbed and the carbon long fibers in the resin can be tangled with one another. Therefore, molding defects such as cracks can be avoided at the upper end of the annular body 1110, and the annular body 1110 can have a high strength at the weld line of the resins.

The attachment portion 1100 may have a radial thickness that is gradually thicker upward from a lower end of the attachment portion. That is, the radial thickness of the annular body 1110 may be smallest at the lowermost end of the annular body, and may gradually increase upward along the circumferential direction of the annular body 1110. With such a thickness configuration of the attachment portion 1100, the carbon long fiber reinforced resin material may smoothly flow through a molding space in the molding die, and therefore, the attachment portion can be molded without a molding defect such as a so-called short shot that appears due to insufficient volume of the molten resin.

The attachment portion 1100 has a plurality of concave portions 3119 that are concave in a circular arc shape in the large outer diameter portion 1111. When the user fits the attachment portion 1100 with the outer peripheral surface of the tubular rod of the rod body 110, the concave portions 3119 allows the user's finger to be caught thereon.

In an embodiment, as shown in FIG. 17, the ring support 1300 of the fishing line guide 3000 has second openings 3552 that are formed in the right half portion 1321 and the left half portion 1322 of the ring supporting portion 1320 respectively. The second openings 3352 are formed below the first openings 2351. The second openings 3352 are formed to be perforated through the ring supporting portion 1320 in the thickness direction along the central axis CA1, and are formed to be symmetrical with respect to the first bending portion 1331. Further, the second openings 3352 are located in the ring supporting portion 1320 inside the coupling portion 1116 of the attachment portion 1100. During the insert injection molding, the resin material composing the attachment portion 1100 (e.g., the carbon long fiber reinforced resin) flows into the second openings 3552 and is hardened in the second openings 3352. That is, the second openings 3352 are filled with the hardened resin material of the attachment portion 1100. Therefore, the coupling structure between the attachment portion 1100 and the ring support 1300 is reinforced and the strength of the fishing line guide 3000 is improved.

In an embodiment, as shown in FIG. 13, the attachment portion 1100 has a first alignment marker 3123 that is formed on the upper surface 3122 of the upper rib 3120. The first alignment marker 3123 is positioned at a center of the upper surface 3122 of the upper rib 3120 in the width direction WD. Further, the first alignment marker 3123 is positioned so as to correspond to the first bending portion 1331 located at the center of the ring supporting portion 1320. The first alignment marker 3123 may be formed as a thin groove formed on the upper surface 3122 or a line drawn on the upper surface 3122. As shown in FIG. 19, the tubular rod of the rod body 110 has a second alignment marker 116 that may be aligned with the first alignment marker 3123 of the attachment portion 1100. The second alignment marker 116 may be formed as a thin groove or a line on the outer peripheral surface of the tubular rod. By aligning the first alignment marker 3123 of the fishing line guide 3000 with the second alignment marker 116 of the rod body 110, the alignment of the fishing line guide 3000 can be simply performed with respect to the rod body 110.

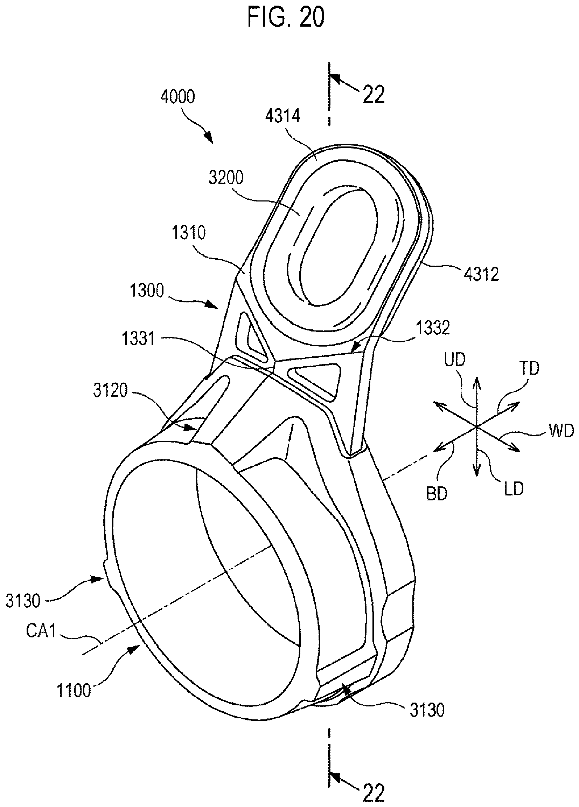

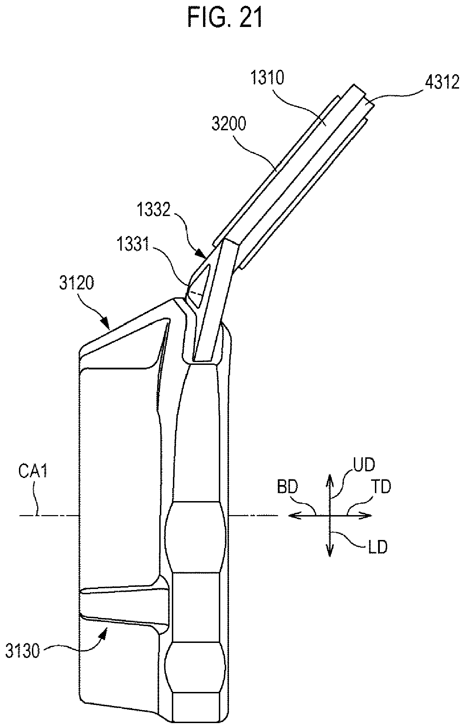

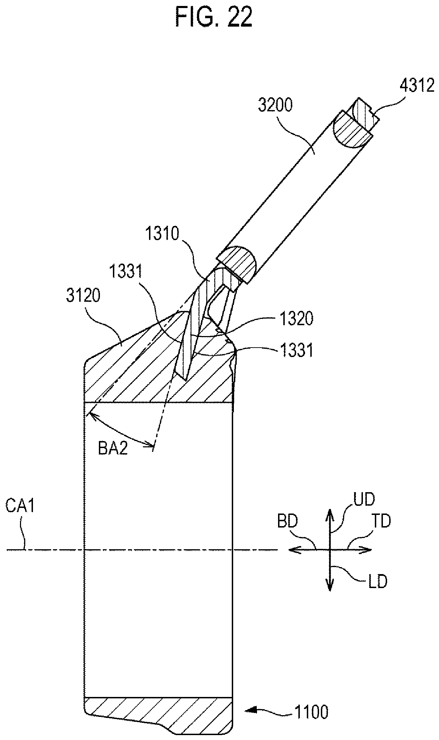

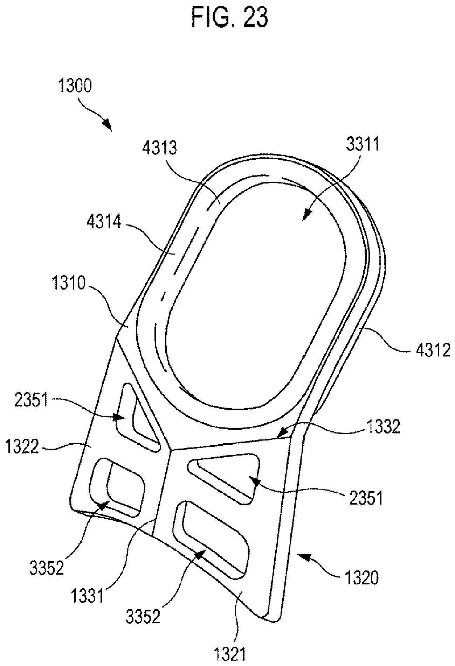

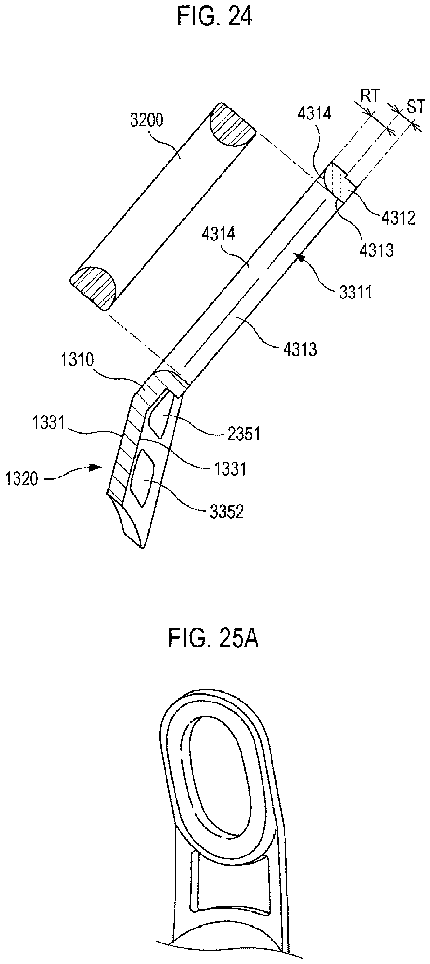

Reference is made to the examples shown in FIGS. 20 to 26 to describe a fishing line guide according to a fourth embodiment of the present disclosure. FIG. 20 is a perspective view showing a fishing line guide according to the fourth embodiment. FIG. 21 is a right side view of the fishing line guide shown in FIG. 20. FIG. 22 is a sectional view taken along the line 22-22 of FIG. 20. FIG. 23 is a perspective view of a ring support shown in FIG. 20. FIG. 24 is a longitudinal sectional view showing a guide ring and a ring support shown in FIG. 20. The fishing line guide 4000 shown in FIGS. 20 to 24 has a configuration similar to that of the fishing line guide 3000 of the above-described embodiments. Descriptions are made hereinafter only as to configurations different from that of the fishing line guide 3000.

As shown in FIGS. 20 to 23, the fishing line guide 4000 includes the ring support 1300 having stronger strength. The ring support 1300 includes, in the ring holding portion 1310, a reinforcing flange 4312 as a structure for improving the strength. The reinforcing flange 4312 has an oblong shape so as to correspond to the outer shape of the guide ring 3200. The reinforcing flange 4312 protrudes from the ring holding portion 1310 in an oblique direction between the frontward direction TD and the downward direction LD. The reinforcing flange 4312 is located in the ring holding portion 1310, and is spaced from the second bending portion 1332. The reinforcing flange 4312 is located in the ring holding portion 1310 such that a lowermost end point of the reinforcing flange is positioned below the both end points of the second bending portion 1332.

As shown in FIGS. 23 and 24, the reinforcing flange 4312 defines the ring holding hole 3311 at an inner peripheral surface thereof. The inner peripheral surface of the reinforcing flange 4312 comprises a fitting surface 4313 and a guide surface 4314. The fitting surface 4313 extends in an annular shape, and the guide ring 3200 is fitted to the fitting surface 4313. The fitting surface 4313 is formed as a flat surface. The reinforcing flange 4312 protrudes perpendicularly from the ring holding portion 1310. The reinforcing flange 4312 may protrude from the ring holding portion 1310 such that a protruding length ST of the fitting surface 4313 is smaller than a thickness RT of the ring holding portion 1310. The guide surface 4314 connects with the fitting surface 4313. The guide surface 4314 extends in an annular shape along the fitting surface 4313. The guide surface 4314 is curved with respect to the fitting surface 4313, and is formed as a curved surface. That is, a diameter of the guide surface 4314 gradually decreases toward the fitting surface 4313. As shown in FIG. 24, when the guide ring 3200 is fitted to the reinforcing flange 4312, the guide ring 3200 can be fitted from the guide surface 4314 to the fitting surface 4313. That is, the outer peripheral surface of the guide ring 3200 can be fitted to the fitting surface 4313 along the guide surface 4314. Therefore, when the guide ring 3200 is fitted to the ring holding portion 1310, cracks on the outer peripheral surface of the guide ring 3200 can be prevented. Further, when the guide ring 3200 and the fitting surface 4313 of the reinforcing flange 4312 are coupled to each other, a space, in which an adhesive can stay, can be formed between the outer peripheral surface of the guide ring 3200 and the guide surface 4314 of the reinforcing flange 4312. Thus, a strong bonding strength may be achieved between the guide ring 3200 and the reinforcing flange 4312.

The bending strength of the ring support 1300 is improved by the reinforcing flange 4312 formed in the ring holding portion 1310. The reinforcing flange 4312 may be formed by forming a through-hole, which corresponds to the shape of the ring holding hole 3311, in the metal sheet for forming the ring support 1300 and then burring the whole circumferencewhole circumference of the through-hole.

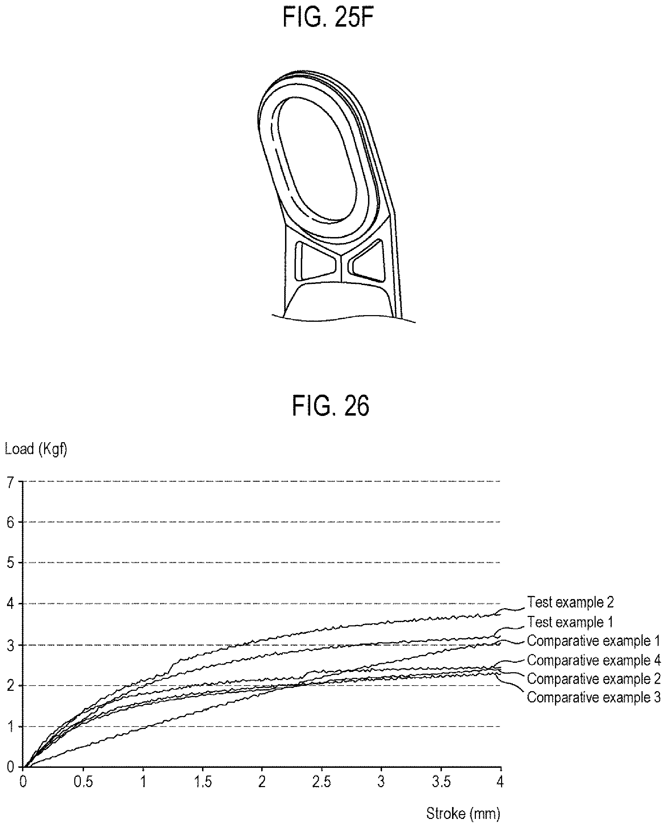

The fishing line guide 4000 of this embodiment includes not only the above-described Y-shaped bending portion in the ring support 1300 but also the reinforcing flange 4312 in the ring holding portion 1310. Thus, the fishing line guide of this embodiment includes the ring support 1300 whose bending strength is improved as a whole. To investigate the improvement of the bending strength made by the Y-shaped bending portion or the improvement of the bending strength by the reinforcing flange 4312, bending tests were conducted on fishing line guides having six ring supports having different shapes. The bending tests were conducted by applying a vertical load to the upper end of the ring holding portions in the state where the rear end surface of the attachment portion of the fishing line guide was fixed to a flat surface. FIGS. 25A to 25F show test pieces on which the bending tests were conducted, respectively, and FIG. 26 is a graph showing the result of the bending tests. Further, Table 1 below shows materials, thicknesses and strengths of the respective six test pieces, wherein the strengths were measured at a stroke of 1mm.

**[Table 1]**

| Test piece | Material | Thickness (mm) | Strength (Kgf) | Comparison |
|---|---|---|---|---|
| Comparative example 1 | Titanium alloy | 0.8 | 0.94 | - |
| Comparative example 2 | Pure titanium | 0.8 | 1.51 | 100% |
| Comparative example 3 | Pure titanium | 0.8 | 1.58 | 104% |
| Comparative example 4 | Pure titanium | 0.8 | 1.77 | 117% |
| Test example 1 | Pure titanium | 0.8 | 1.96 | 130% |
| Test example 2 | Pure titanium | 0.8 | 2.09 | 138% |

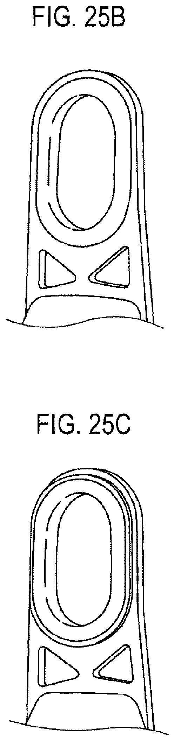

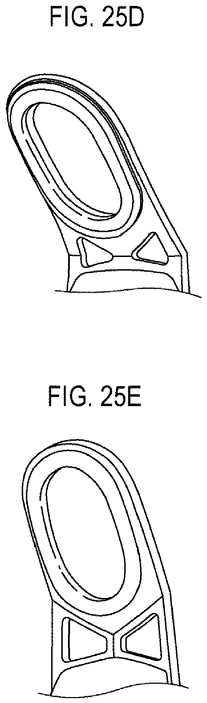

In the ring support of the fishing line guide according to comparative example 1 shown in FIG. 25A, a rectangular opening is formed in the ring supporting portion, and the ring holding portion is inclined at a predetermined angle with respect to the ring supporting portion. In the ring support of the fishing line guide according to comparative example 2 shown in FIG. 25B, an opening similar to the above-described first opening is formed, but the ring holding portion and the ring supporting portion are not bent. In the ring support of the fishing line guide according to comparative example 3 shown in FIG. 25C, a flange similar to the above-described reinforcing flange is formed in the ring holding portion, and an opening similar to the above-described first opening is formed in the ring supporting portion. But, the ring supporting portion and the ring holding portion are not bent. In the ring support of the fishing line guide according to comparative example 4 shown in FIG. 25D, a flange similar to the above-described reinforcing flange is formed in the ring holding portion, and an opening similar to the above-described first opening is formed in the ring supporting portion, and the ring supporting portion is angularly bent at the opening. In the fishing line guide according to test example 1 shown in FIG. 25E, the above-described ring support of the fishing line guide 3000 shown in FIG. 13 is employed. In the fishing line guide according to test example 2 shown in FIG. 25F, the above-described ring support of the fishing line guide 4000 shown in FIG. 20 is employed.

As seen from Table 1 and FIG. 26, the ring support according to test example 1 has the bending strength improved by 30% in comparison with the bending strength of the ring support according to comparative example 2. Further, the ring support according to test example 2 has the bending strength improved by 38% in comparison with the bending strength of the ring support according to comparative example 2.

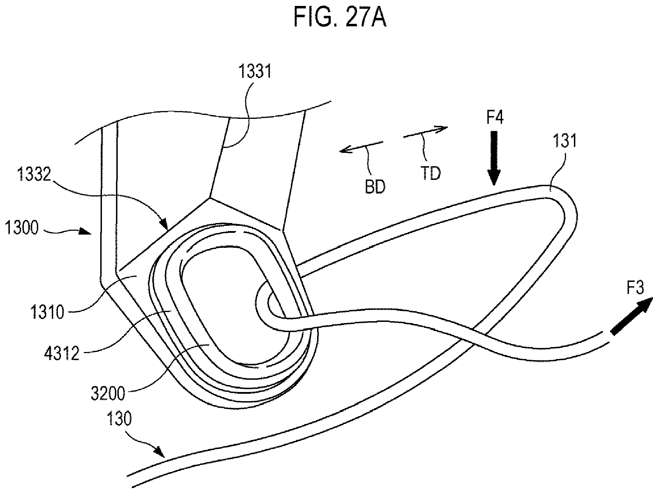

The fishing line guides according to the above-described embodiments are configured to smoothly untangle the line tangle of a fishing line in the event of the line tangle of the fishing line. For example, due to the Y-shaped bending portion of the ring support, the line tangle occurring at the fishing line guide can be smoothly untangled. With reference to FIGS. 27A to 27G, descriptions are made as to an example where the line tangle of the fishing line occurs and an example where the line tangle is untangled. In FIGS. 27A to 27G, an arrow F3 indicates a tension which acts on a fishing line when a fishing rig is cast, an arrow F4 indicates a wind force which is applied to a fishing line guide when a fishing rig is cast, and an arrow F5 indicates a force of returning a fishing line toward a reel.

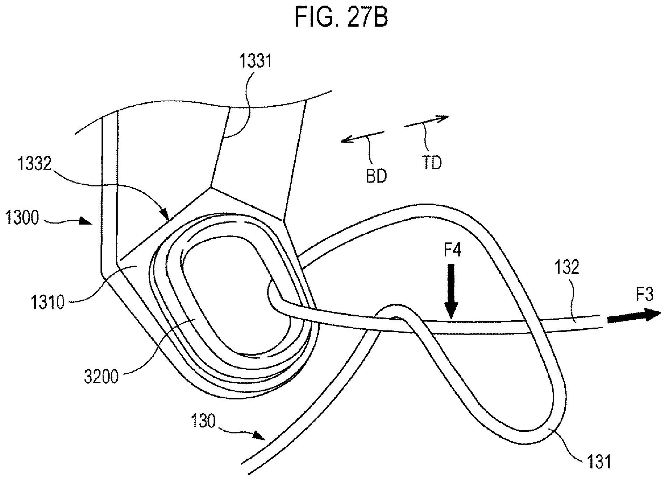

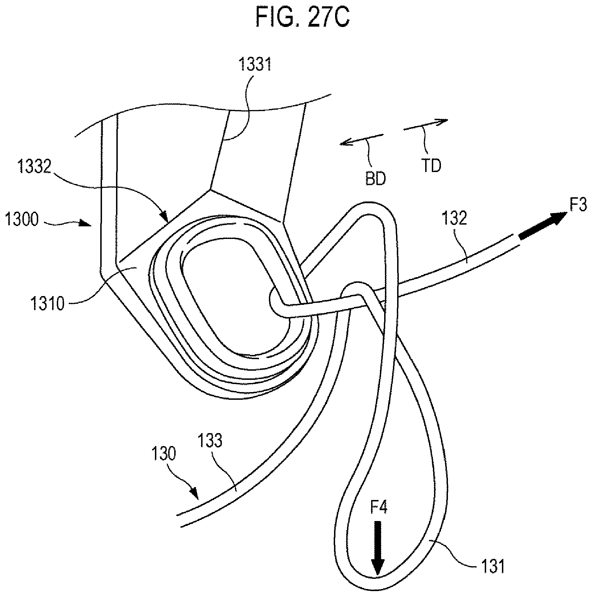

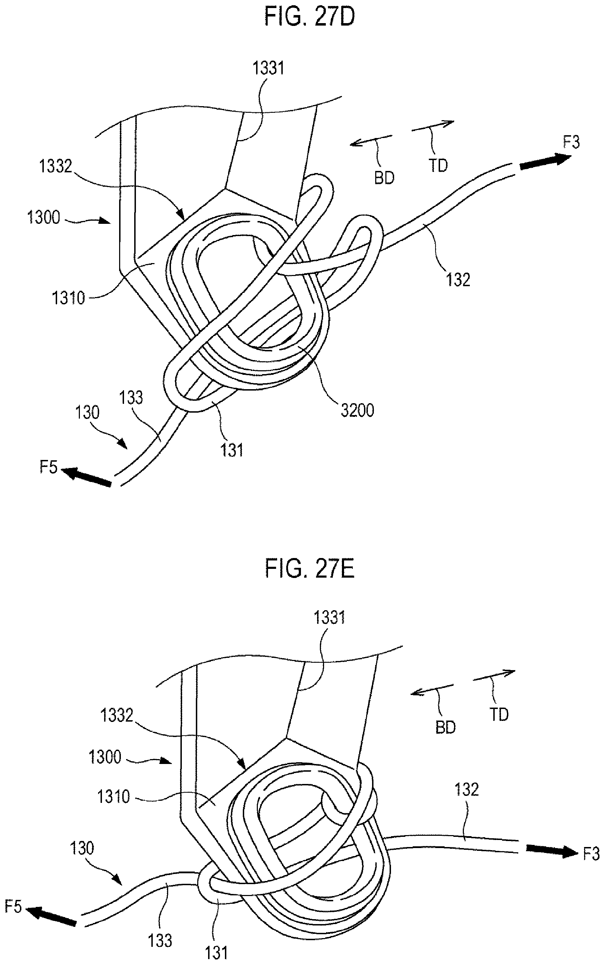

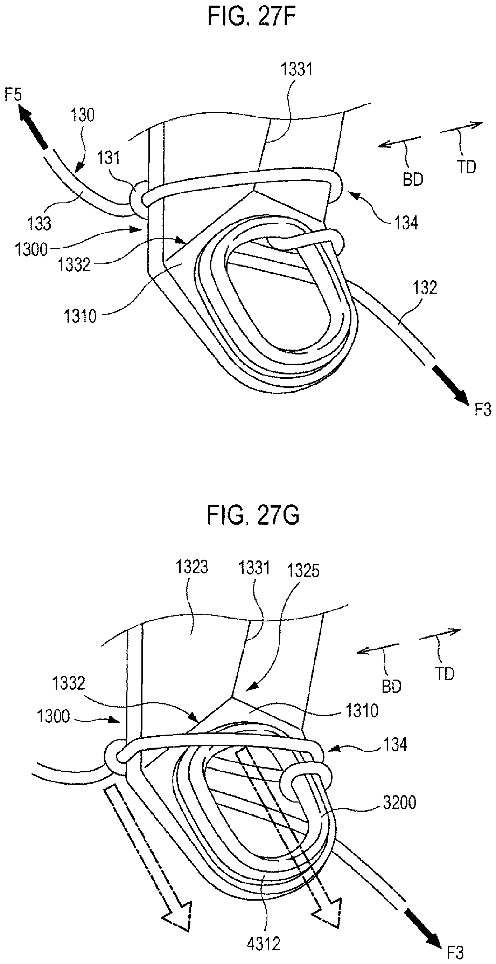

Referring to FIG. 27A, in the fishing line 130 reeled out from the reel when casting the fishing rig, a portion of the fishing line may pass the ring support 1300 due to the wind force F4 or due to a movement of the fishing rod, and then may make a looped portion 131. Referring to FIG. 27B, the looped portion 131 before passing through the guide ring 3200 may cross a portion 132 of the fishing line that is moved toward the tip of the fishing rod. Referring to FIG. 27C, the looped portion 131 may be moved toward the upper end of the ring support 1300 due to the wind force F4 or due to the movement of the fishing rod. Referring to FIG. 27D, due to the change of wind direction or the movement of the fishing rod, the force F5 of returning the fishing line toward the reel acts on a portion 133 of the fishing line that does not enter the guide ring 3200, and then the looped portion 131 may be inserted into between the portion 133 of the fishing line and the ring support 1300 and then be wound on the ring support 1300. Referring to FIG. 27E, due to the returning force F5 and the tension F3 heading toward the tip of the fishing rod, the looped portion 131 wound on the ring support 1300 may be pulled and contracted. Referring to FIG. 27F, the looped portion 131 may be further contracted by the returning force F5, and the fishing line 130 may be brought into a locked state while forming a line tangle portion 134 wound in the vicinity of the first bending portion 1331 of the ring support 1300. Due to the line tangle portion 134 in the locked state shown in FIG. 27F, the line tangle of the fishing line may occur in the fishing line guide.

However, due to the Y-shaped bending portion of the ring support 1300, the fishing line guides according to the embodiments can smoothly untangle the line tangle of the fishing line. In the state where the line tangle occurs, the tension F3 continues to be applied to the fishing line 130. Referring to FIG. 27G, the line tangle portion 134 in the locked state is smoothly slid toward the upper end of the ring support 1300 by the tension F3. If the line tangle portion 134 passes the upper end of the ring support 1300, then the line tangle portion 134 can be untangled. In this regard, due to the Y-shaped bending portion, the ring holding portion 1310 is bent with respect to the ring supporting portion 1320 and the ring supporting portion 1320 is bent toward the tip of the fishing rod. Therefore, a lower wall surface of the reinforcing flange 4312 and a lower wall surface of the guide ring 3200 are situated in a concave portion 1325 of the front surface 1323 which is formed by the Y-shaped bending portion. That is, both a lowermost end point of the reinforcing flange 4312 and a lowermost end point of the guide ring 3200 are located below the both end points in the width direction of the second bending portion 1332. In addition, due to the Y-shaped bending portion, the line tangle portion 134 cannot enter the concave portion 1325 and is spaced from the concave portion 1325. Therefore, the line tangle portion 134 can be slid toward the upper end of the ring support 1300 and then be untangled without being caught by the lower wall surface of the reinforcing flange 4312 or the lower wall surface of the guide ring 3200.

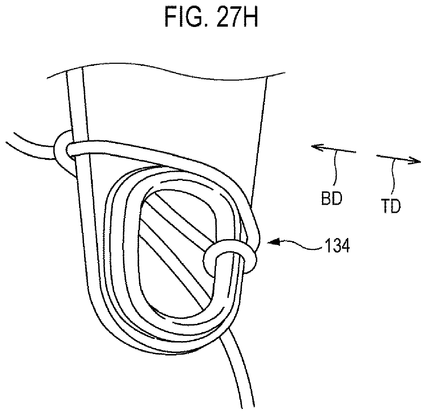

FIG. 27H shows a ring support according to a comparative example where the line tangle cannot be untangled. As shown in FIG. 27H, in the ring support which does not include the Y-shaped bending portion according to the embodiments, the line tangle portion 134 is caught by the lower wall surface of the reinforcing flange or the lower wall surface of the guide ring, and cannot be moved toward the upper end of the ring support. Thus, the line tangle cannot be untangled.

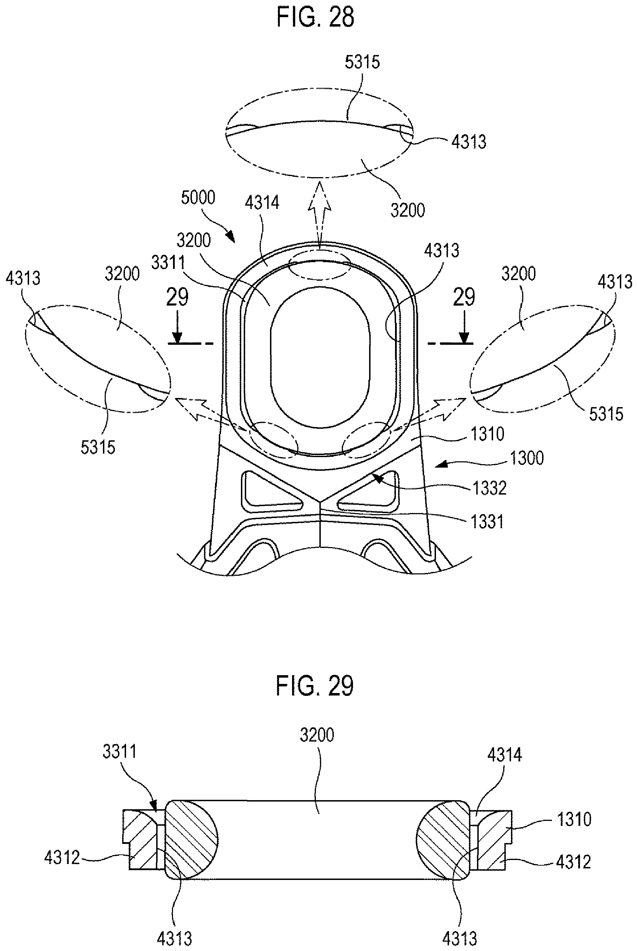

Reference is made to the examples shown in FIGS. 28 and 29 to describe a fishing line guide according to a fifth embodiment of the present disclosure. FIG. 28 shows a ring support of a fishing line guide according to the fifth embodiment, and FIG. 29 is a sectional view taken along the line 29-29 of FIG. 28.

The reinforcing flange 4312 of the ring support 1300 has a plurality of fitting protrusions 5315 formed in the inner peripheral surface thereof (specifically, the fitting surface 4313). As shown in FIG. 28, three fitting protrusions 5315 may be formed in the fitting surface 4313. The number of the fitting protrusions 5315 is not limited to three and may be four or more. The fitting protrusions 5315 protrude from the fitting surface 4313 of the reinforcing flange 4312 toward the ring holding hole 3311 with a slight height. The fitting protrusions 5315 may be formed by cutting the fitting surface 4313 of the reinforcing flange 4312 with a slight depth through shaving working.

The guide ring 3200 may be inserted into the ring holding hole 3311 and may be fitted to the surfaces of the three fitting protrusions 5315. If the guide ring 3200 is inserted into the ring holding hole 3311, the fitting protrusions 5315 come into contact with the outer peripheral surface of the guide ring 3200. The ring holding portion 1310 holds the guide ring 3200 at three locations by the three fitting protrusions 5315 of the reinforcing flange 4312. That is, the ring holding portion 1310 is contacted with the guide ring 3200 through the three fitting protrusions 5315. The outer peripheral surface of the guide ring 3200 does not come into surface contact with the fitting surface 4313 of the reinforcing flange 4312, but comes into surface contact or point contact with the fitting protrusions 5315. Further, as shown in FIG. 29, the guide ring 3200 is fitted with the fitting protrusions 5315 with a clearance formed between the outer peripheral surface of the guide ring 3200 and the inner peripheral surface of the reinforcing flange 4312 (the fitting surface 4313). Such a clearance is formed due to the fitting protrusions 5315 protruding from the fitting surface 4313, and is capable of receiving an adhesive. Due to the structure holding the guide ring 3200 by fitting at three locations, it is not necessary to accurately work the guide ring 3200 and the ring holding hole 3311 so that the dimensions of the guide ring 3200 and the ring holding hole 3311 allow the guide ring and the ring holding hole to be fitted with each other. That is, due to the structure holding the guide ring 3200 by fitting at three locations, a fitting tolerance can be increased between the guide ring 3200 and the ring holding hole 3311.

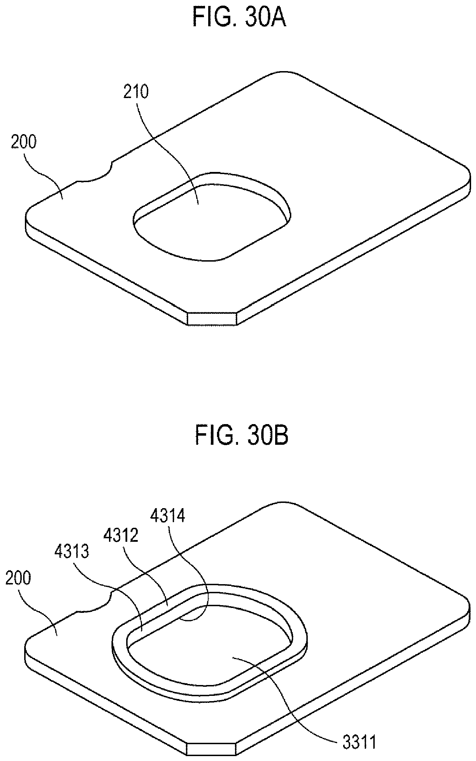

FIGS. 30A to 30G show an example of manufacturing the ring support and the fishing line guide shown in FIG. 28.

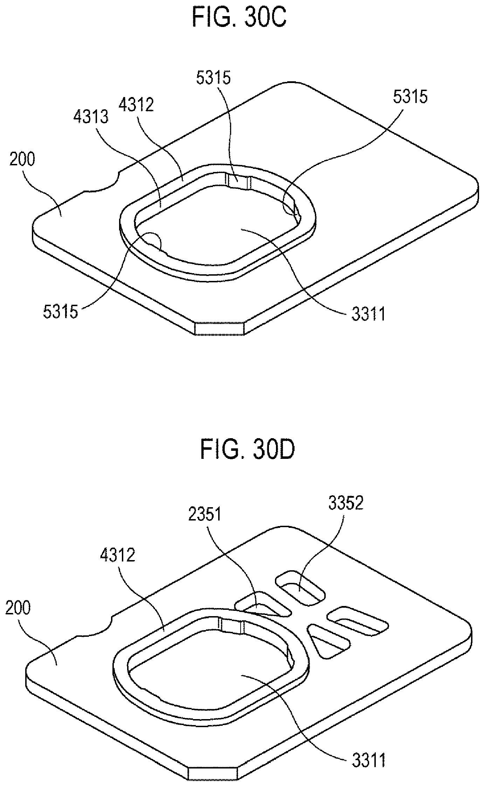

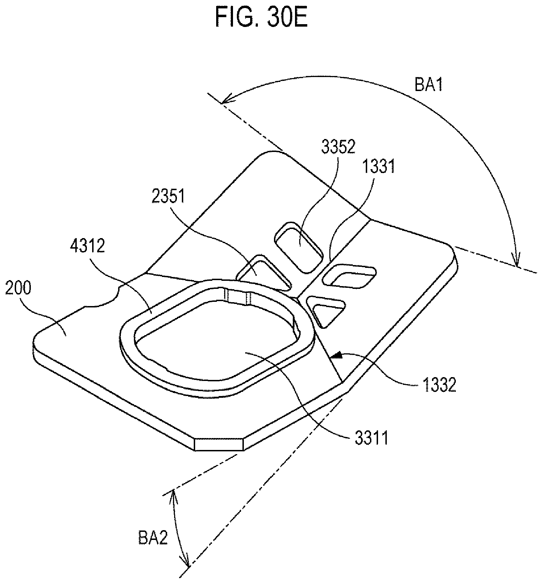

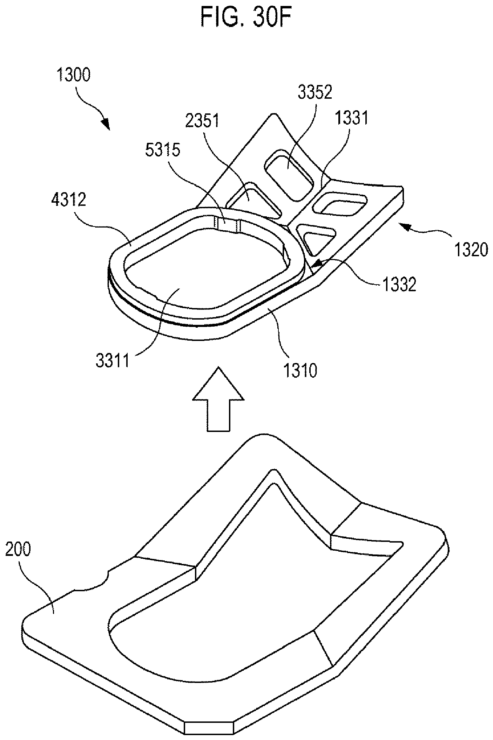

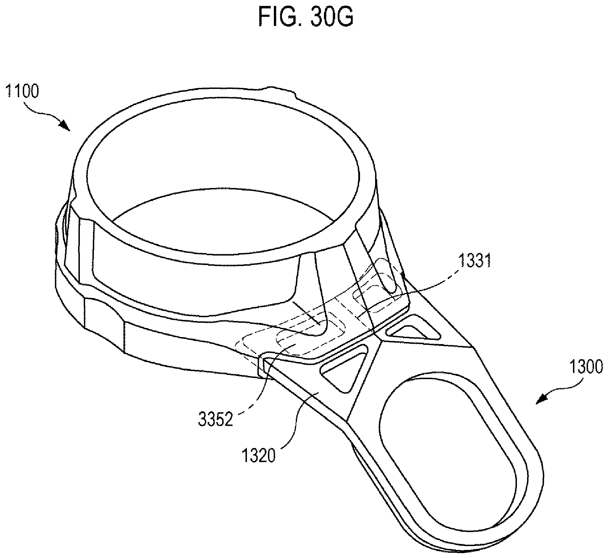

Referring to FIG. 30A, a through-hole 210, which has a shape corresponding to the shape of the ring holding hole 3311 shown in FIG. 28, is formed in a metal sheet 200. The metal sheet 200 may be composed of a metallic material such as pure titanium. Forming the through-hole 210 may be performed through punching or drilling. Referring to FIG. 30B, the reinforcing flange 4312 is formed along the whole circumference of the through-hole 210 shown in FIG. 30A. Forming the reinforcing flange 4312 may be performed through burring, for example, by making the entire edge portion of the through-hole 210 protrude by means of a press punch such that the entire edge portion of the through-hole is directed toward the tip of the fishing rod (i.e., the entire edge portion is perpendicular to the ring holding portion). Therefore, the reinforcing flange 4312, which has the fitting surface 4313 and the guide surface 4314 and forms the ring holding hole 3311 by the fitting surface 4313, is formed along the circumference of the ring holding hole 3311. Referring to FIG. 30C, the fitting protrusions 5315 are formed in the fitting surface 4313 of the reinforcing flange 4312. Forming the fitting protrusions 5315 may be performed through shaving. For example, the fitting protrusions 5315 may be formed by slightly cutting the fitting surface 4313 through shaving such that the fitting protrusions 5315 remain in the fitting surface. Referring to FIG. 30D, the first openings 2351 and the second openings 3352 are formed in the metal sheet 200 so as to be adjacent to the ring holding hole 3311. Forming the first opening 2351 and the second opening 3352 may be performed through punching or drilling. Referring to FIG. 30E, by press working the metal sheet 200 by a press die, the first bending portion 1331 and the second bending portion 1332 are formed in the metal sheet, and at the same time, a portion of the metal sheet 200, which is located along the first bending portion 1331 and the second bending portion 1332, are bent. Forming the first and second bending portions 1331, 1332 and bending the metal sheet 200 are performed by using the press die that is configured to form the first bending portion 1331 and the second bending portion 1332. Further, at this time, the work-hardened portions corresponding to the shapes of the first bending portion 1331 and the second bending portion 1332 are created within the metal sheet 200. Next, the ring support 1300 shown in FIG. 30F is blanked from the metal sheet 200 by press-working (e.g., blanking) the metal sheet 200 in which the first and second bending portions 1331, 1332 are formed and which is bent through the first and second bending portions 1331, 1332. Next, referring to FIG. 30G, the attachment portion 1100 is injection-molded from a resin material (e.g., the carbon long fiber reinforced resin) by using the ring support 1300 as an insert. The ring support 1300 and the attachment portion 1100 are partially coupled to each other in such a manner that the lower portion of the ring supporting portion 1320 is embedded in the attachment portion 1100. The portion of the ring supporting portion 1320, which is embedded in the attachment portion 1100, includes the second openings 3352 and a lower portion of the first bending portion 1331.

As shown in FIG. 30F, the ring support 1300 is formed by forming the first and second bending portions 1331, 1332 in the metal sheet 200 and thereafter blanking the shape of the ring support 1300 from the metal sheet 200. Therefore, the finished ring support 1300 has little change in its outer dimension. In addition, the cut surfaces of the ring support 1300 (the lateral surfaces of the ring support 1300) cut from the metal sheet 200 do not have an angle. The lateral surfaces of the ring support 1300 form an acute angle with the front or rear surface of the ring support 1300. Said acute angle is a half of the first bending angle. In the case where a workpiece corresponding to the planar shape of the ring support 1300 is blanked from the metal sheet 200 and thereafter the first and second bending portions 1331, 1332 are formed in such a workpiece, the cut surfaces of the ring support 1300 form an approximately right angle with the front or rear surface of the ring support 1300 and thus the dimensional stability is deteriorated because of bending. That is, in such a case, the lateral surfaces of the ring support 1300 are inclined with respect to the central axis of the fishing rod or the central axis of the attachment portion. However, in the ring support 1300 which is finished as described above, its cut surfaces (the lateral surfaces of the ring support) do not have an angle. Thus, the finished ring support 1300 can be precisely seated in the die for injection-molding the attachment portion, and molding defects such as resin leakage can be avoided. The examples described with reference to FIGS. 30A to 30G may be applied for forming the ring supports of the above-described embodiments. In such a case, some of the examples shown in FIGS. 30A to 30F may be omitted depending upon the shapes of the ring supports.

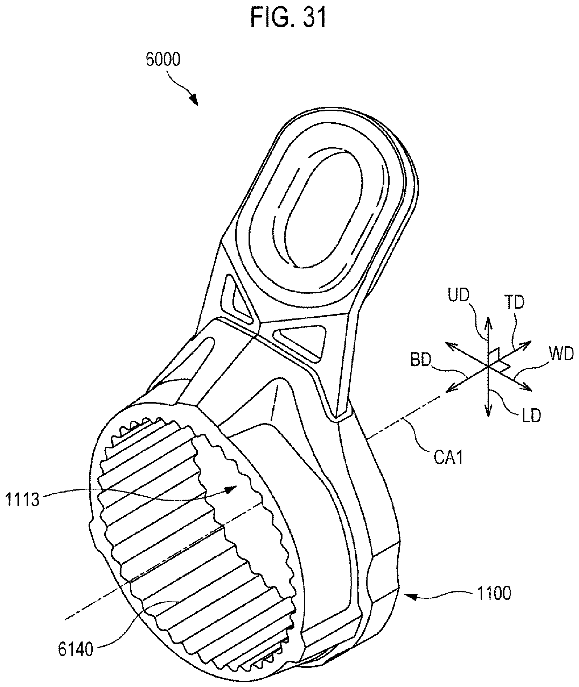

Reference is made to the example shown in FIG. 31 to describe a fishing line guide according to a sixth embodiment of the present disclosure. In the fishing line guide 6000 according to this embodiment, the attachment portion 1100 has a plurality of serrations 6140 that are arranged in a circumferential direction in the inner peripheral surface of the attachment portion and extend in the direction of the central axis CA1 of the fishing rod. A cross-sectional shape of the serration has a triangular shape. In this embodiment, the attachment portion 1100 is composed of a high-strength resin material (e.g., the carbon long fiber reinforced resin). Therefore, an apex portion of the triangular shape of the serration 6140 has a high strength. Thus, when the attachment portion 1100 is fitted with the outer peripheral surface of the tubular rod of rod body, the apex portion of the serration 6140 is neither collapsed nor crushed due to a fitting force. That is, due to the high strength of the attachment portion 1100, the serrations 6140 maintain their initial heights without being collapsed. Since the apex portions of the serrations 6140 are not collapsed, the attachment portion 1100 has a strong rotation resistance force.

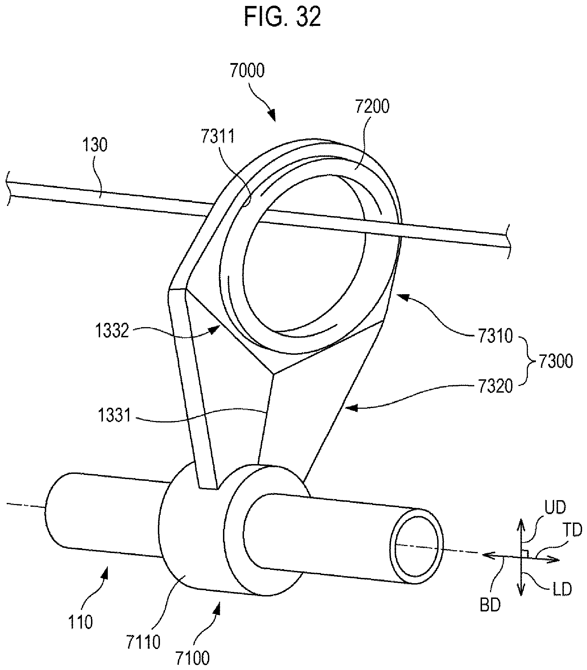

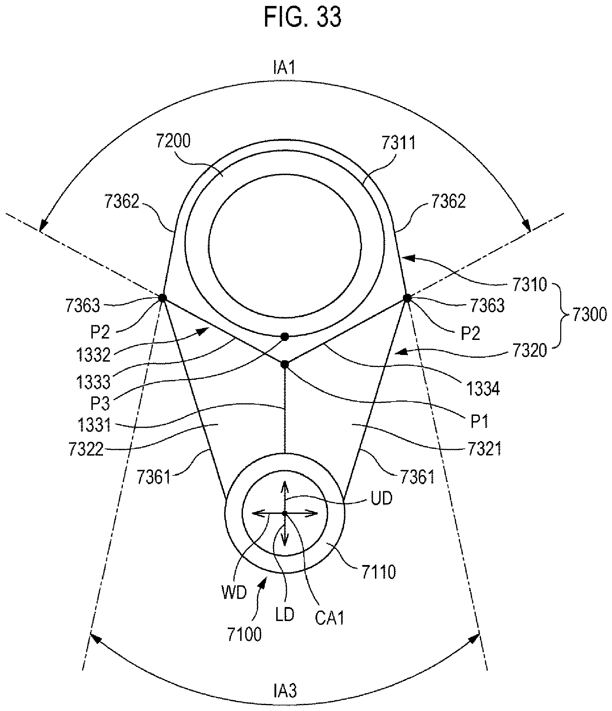

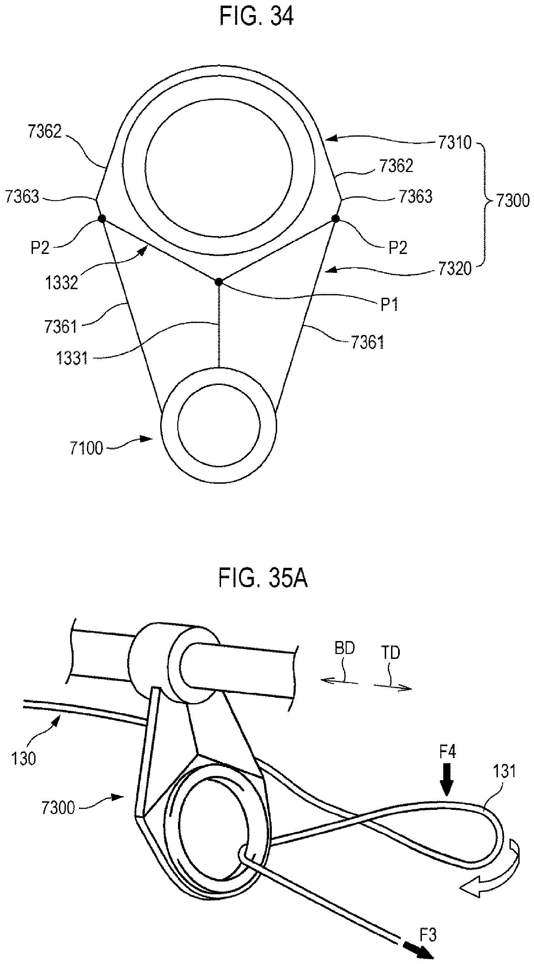

Reference is made to the examples shown in FIGS. 32 to 34 to describe a fishing line guide according to a seventh embodiment of the present disclosure. FIG. 32 is a perspective view showing a fishing line guide according to a seventh embodiment of the present disclosure. FIG. 33 is a front view of the fishing line guide shown in FIG. 32. FIG. 34 is a front view showing a variation example of the fishing line guide according to the seventh embodiment.

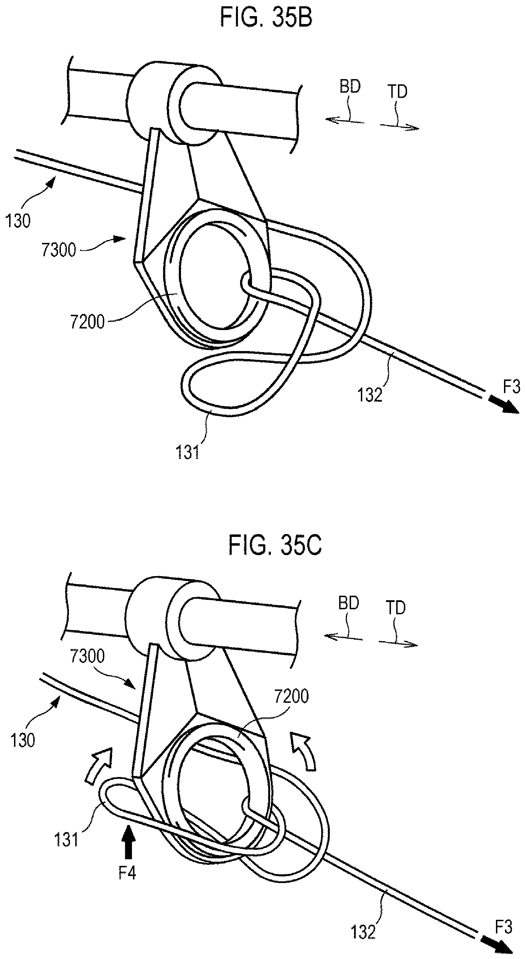

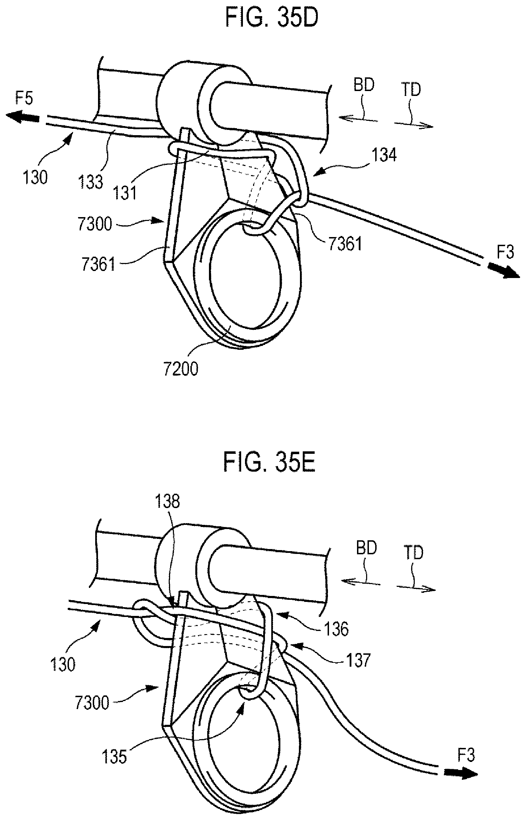

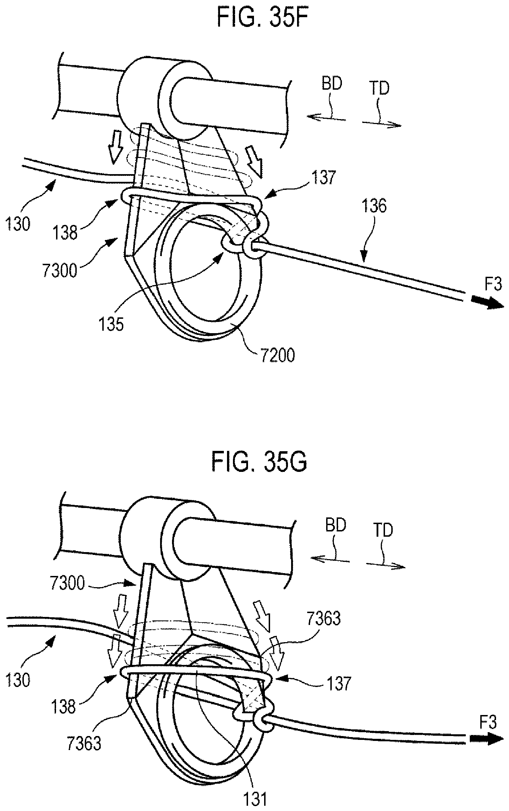

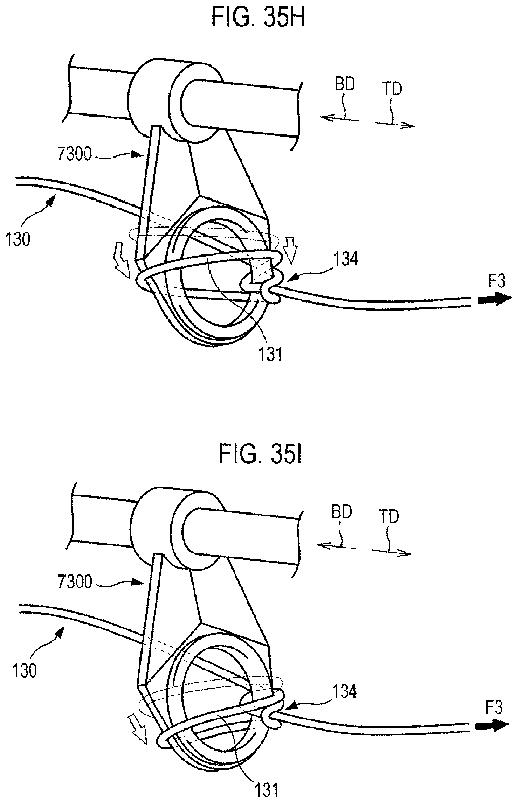

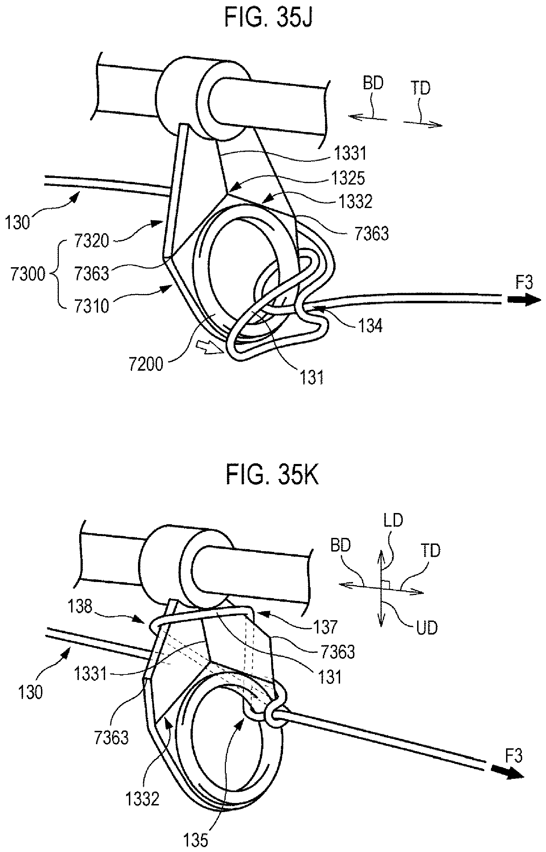

The fishing line guide 7000 according to the seventh embodiment shown in FIG. 32 has the same configuration as those of the fishing line guides of the above-described embodiments, except that the guide ring is larger than the outer diameter of the tubular rod and the ring support has a shape becoming gradually narrower toward the attachment portion. Further, the ring support and the attachment portion shown in FIGS. 32 and 35 can be manufactured in the same manner as the manner described with reference to FIGS. 30A to 30G.

Referring to FIG. 32, the fishing line guide 7000 includes: an attachment portion 7100 attached to the rod body 110 of the fishing rod (specifically, one of the tubular rods constituting the rod body 110); a guide ring 7200 through which the fishing line 130 passes; and a ring support 7300 that holds and supports the guide ring 7200 and is partially coupled to the attachment portion 7100.

The guide ring 7200 has an outer diameter larger than that of the tubular rod of the rod body 110. Therefore, the fishing line guide 7000 may be applied to an example where the guide ring having an outer diameter larger than that of the tubular rod is used. The shape and configuration of the guide ring 7200 may be similar to the shape and configuration of the guide ring shown in FIGS. 3 and 13.

The attachment portion 7100 includes an annular body 7110, and one of the tubular rods of the rod body 110 can pass through the annular body 7110. In the state where the tubular rod passes through the annular body 7110, the attachment portion 7100 can slide along the tubular rod and be rotated with respect to the tubular rod. The tubular rod has a tapering shape that becomes gradually thinner in the frontward direction TD. Therefore, the attachment portion 7100 can be fitted with and fixed to the outer peripheral surface of the tubular rod by moving the annular body 7110 in the rearward direction BD.

The attachment portion 7100 is integrally coupled to the ring support 7300 such that a lower portion of the ring support 7300 is embedded in the attachment portion 7100. For example, the attachment portion 7100 and the ring support 7300 may be integrally coupled to each other through injection molding of the resin material by using the ring support 7300 as an insert such that the lower portion of the ring support 7300 is embedded in the annular body 7110. The resin material of the attachment portion 7100 may include, but is not limited to, the above-described carbon long fiber reinforced resin material. As another example, the ring support 7300 and the attachment portion 7100 may be integrally coupled to each other through a manner of fitting and adhesive bonding between the lower portion of the ring support 7300 and the attachment portion 7100 such that the lower portion of the ring support 7300 is embedded in the annular body 7110.

The material and working manner of the ring support 7300 are similar to the material and working manner of the ring support in the above-described embodiments. The ring support 7300 is formed as a metallic thin plate whose portions constituting the ring support 7300 are bent or curved with respect to one another by bending portions formed therein.

The ring support 7300 has a shape that is suitable for the guide ring 7200 having an outer diameter larger than the outer diameter of the tubular rod. To this end, the ring support 7300 has a shape that becomes gradually narrower from the guide ring 7200 toward the attachment portion 7100. That is, portions of the lateral end edges of the ring support 7300 are formed to become close to a center of the ring support 7300 in the downward direction LD toward the attachment portion 7100.

Referring to FIG. 33, in an embodiment, the ring support 7300 includes a pair of first lateral end edges 7361, a pair of second lateral end edges 7362, and a pair of boundary portions 7363. The pair of first lateral end edges 7361 extend from the attachment portion 7100 in the upward direction UD, and are inclined so as to be away from each other in the upward direction. The pair of second lateral end edges 7362 extend from the pair of first lateral end edges 7361 in the upward direction UD respectively. The pair of second lateral end edges 7362 are inclined at an inclination angle different from the inclination angle of the pair of first lateral end edges 7361. Each of the pair of boundary portions 7363 is located between each of the first lateral end edges 7361 and each of the second lateral end edges 7362. The boundary portion 7363 becomes a boundary between the first lateral end edge 7361 and the second lateral end edge 7362. The inclination angle of the first lateral end edges 7361 and the inclination angle of the second lateral end edges 7362 are different with reference to the boundary portion 7363.

The pair of first lateral end edges 7361 become gradually more away from each other from the attachment portion 7100 toward the upper end of the ring support 7300. The pair of second lateral end edges 7362 are located in the vicinity of the guide ring 7200. The pair of second lateral end edges 7362 become gradually closer to each other toward the upper end of the ring support 7300. The pair of second lateral end edges 7362 are inclined toward each other at an included angle of more than zero degree and less than or equal to 30 degrees. As another example, the pair of second lateral end edges 7362 may be parallel with each other without the included angle. Due to the above-described shapes of the lateral end edges, the ring support 7300 has a shape that becomes gradually wider toward the guide ring 7200 and becomes gradually narrower from the boundary portions 7363. Thus, a width of the ring support 7300 becomes gradually larger and then gradually smaller in the upward direction UD, and becomes maximal at the boundary portions 7363.

Referring to FIGS. 32 and 33, the ring support 7300 includes a ring holding portion 7310 holding the guide ring 7200, and a ring supporting portion 7320 supporting the guide ring 7200 through the ring holding portion 7310. In the metallic thin plate composing the ring support 7300, the ring holding portion 7310 and the ring supporting portion 7320 are integrally formed, and the ring holding portion 7310 is flat.

The ring holding portion 7310 has a ring holding hole 7311 to which the guide ring 7200 is coupled. The ring holding hole 7311 is perforated through the ring holding portion 7310 in a thickness direction of the ring holding portion 7310. The ring holding portion 7310 has an approximately annular shape to hold the guide ring 7200 along the whole circumference of the guide ring 7200 by the ring holding hole 7311. The shape of the ring holding hole 7311 and the coupling between the ring holding hole 7311 and the guide ring 7200 may be similar to the shape and the coupling which have been described with reference to the fishing line guide of the above-described first embodiment.

The upper edge of the ring holding portion 7310 has a semicircular shape. Both lateral end edges of the ring holding portion 7310 in the width direction WD may become gradually more away from each other in the downward direction LD toward the attachment portion 7100. As shown in FIG. 33, the lateral end edges of the ring holding portion 7310 are formed as the above-described second lateral end edges 7362. Therefore, the both lateral end edges of the ring holding portion 7310 are inclined toward each other at an included angle IA3 with respect to a center of the ring holding hole 7311. As another example, the both lateral end edges of the ring holding portion 7310 may be parallel. As a further example, portions of the lateral end edges of the ring holding portion 7310 may be formed as the above-described second lateral end edges 7362. A lower end edge of the ring holding portion 7310 has a V shape convex in the downward direction LD, and the ring holding portion 7310 is integrally connected to the ring supporting portion 7320 at the lower end edge thereof.

Referring to FIG. 33, the ring supporting portion 7320 has a V-shaped upper end edge that corresponds to the V-shaped lower end edge of the ring holding portion 7310. Each lateral end edge of the ring supporting portion 7320 in the width direction WD includes the above-described first lateral end edge 7361. Therefore, the both lateral end edges of the ring supporting portion 7320 become gradually closer to each other in the downward direction LD toward the attachment portion 7100.

The ring support 7300 has the above-described first bending portion 1331 in the ring supporting portion 7320. The first bending portion 1331 is located at the center of the ring supporting portion 7320 in the width direction WD The first bending portion 1331 extends to a lower end of the ring supporting portion 7320 in the downward direction LD toward the tubular rod of the rod body 110. The ring supporting portion 7320 is embedded within the attachment portion 7100 at its lower portion including the first bending portion 1331.

The ring supporting portion 7320 is bent with reference to the first bending portion 1331 at the above-described first bending angle in the direction toward the tip of the fishing rod (the frontward direction TD). Therefore, as shown in FIG. 33, the ring supporting portion 7320 has a right half portion 7321 and a left half portion 7322 that are divided by the first bending portion 1331 and are formed in a symmetrical shape. The right half portion 7321 and the left half portion 7322 are integrally formed via the first bending portion 1331, and are inclined at the above-described first bending angle in the frontward direction TD so as to face toward each other.

The ring support 7300 has the above-described second bending portion 1332 that is a boundary between the ring holding portion 7310 and the ring supporting portion 7320. The lower end edge of the ring holding portion 7310 and the upper end edge of the ring supporting portion 7320 form the second bending portion 1332. The ring holding portion 7310 is bent with reference to the second bending portion 1332 with respect to the ring supporting portion 7320 at the above-described second bending angle in the direction toward the tip of the fishing rod (the frontward direction TD). The second bending portion 1332 extends from one lateral end of the ring support 7300 to an opposite lateral end of the ring support 7300. Connection points between the second bending portion 1332 and the both lateral end edges of the ring support 7300 become both end points P2 of the second bending portion. In this embodiment, the pair of boundary portions 7363 between the first lateral end edges 7361 and the second lateral end edges 7362 are located at the both end points P2 of the second bending portion 1332 respectively.

The second bending portion 1332 is convex toward the lower end of the ring support 7300. Referring to FIGS. 32 and 33, the second bending portion 1332 has a V shape convex in the downward direction LD, and is connected to the upper end of the first bending portion 1331 at its center point P1. Further, when the ring support 7300 is viewed from a lateral side, the second bending portion 1332 is inclined in an oblique direction between the frontward direction TD and the upward direction UD As shown in FIG. 33, the second bending portion 1332 includes a pair of the linear bending portions 1333, 1334 that extend from the connection point between the first bending portion 1331 and the second bending portion 1332 (the center point P1 of the second bending portion 1332) at an obtuse angle with respect to the first bending portion 1331.

The first bending portion 1331 and the second bending portion 1332 meets each other and form a Y shape, thereby forming the Y-shaped bending portion in the ring support 7300. Accordingly, the ring support 7300 is formed as a metallic thin plate in which the ring holding portion 7310, the right half portion 7321 of the ring supporting portion 7320 and the left half portion 7322 of the ring supporting portion 7320 are bent toward one another. Further, in such a metallic thin plate, the ring holding portion 7310, the right half portion 7321 of the ring supporting portion 7320, and the left half portion 7322 of the ring supporting portion 7320 are integrally formed via the first and second bending portions 1331, 1332 forming the Y-shaped bending portion, and the ring holding portion and the right and left half portions of the ring supporting portion are bent toward one another by the first and second bending portions 1331, 1332. As such, the ring support 7300 is provided with the Y-shaped bending portion that is formed by the first bending portion 1331 and the second bending portion 1332. Further, the above-described Y-shaped work-hardened portions are formed within the ring support 7300 along the Y-shaped bending portion. Thus, the fishing line guide 7000 has an improved bending strength, an improved rotation prevention strength and an improved attachment strength due to the above-described Y-shaped bending portion formed by the first bending portion and the second bending portion.

To smoothly untangle the line tangle, each portion of the ring support 7300 may be formed in a specific dimensional range. Referring to FIG. 33, an included angle between the linear bending portions 1333, 1334 of the second bending portion 1332 may be the above-described included angle IA1. Further, the center point P1 of the second bending portion 1332 is located below the both end points P2 of the second bending portion 1332, and the lowermost end point P3 of the ring holding hole 7311 is located below the both end points P2 of the second bending portion 1332, thereby contributing to the smooth untangling of the line tangle. Further, the pair of boundary portions 7363 of the lateral end edges of the ring support 7300 are located at the both end points P2 of the second bending portion 1332 respectively, or are located above the both end points P2 of the second bending portion 1332 respectively. As shown in FIG. 33, the pair of boundary portions 7363 of the lateral end edges of the ring support 7300 may be located at the both end points P2. When the ring support 7300 is formed such that the first bending angle BA1, the second bending angle BA2, the included angle IA1 and the included angle IA3 have the angle values within the above-described respective ranges, the line tangle in the ring support 7300 can be smoothly untangled. Further, the line tangle in the ring support 7300 can be smoothly untangled due to the above-described positional relationship of the center point P1 of the second bending portion 1332, the both end points P2 of the second bending portion 1332, the lowermost end point P3 of the ring holding hole 7311, and the pair of boundary portions 7363 of the lateral end edges of the ring support 7300.

FIG. 34 shows a variation example of the fishing line guide of the above-described seventh embodiment. Referring to FIG. 34, the pair of boundary portions 7363 of the lateral end edges of the ring support 7300 are located above the both end points P2 of the second bending portion 1332. Therefore, each lateral end edge of the ring holding portion 7310 includes both the first lateral end edge 7361 and a portion of the second lateral end edge 7362.

With reference to FIGS. 35A to 35J, descriptions are made as to examples where the line tangle occurs and is untangled in the fishing line guide of this embodiment. FIGS. 35A to 35J sequentially show the examples where the line tangle occurs and is then untangled in the fishing line guide shown in FIG. 32. In FIGS. 35A to 35J, an arrow F3 indicates a tension which acts on a fishing line when a fishing rig is cast, an arrow F4 indicates a wind force which is applied to a fishing line guide, and an arrow F5 indicates a force of returning a fishing line toward a reel.

Referring to FIG. 35A, in the fishing line reeled out from the reel when casting the fishing rig, a portion of the fishing line 130 may pass the ring support 7300 due to the wind force F4 or due to a movement of the fishing rod, and then may make the looped portion 131. Referring to FIG. 35B, the looped portion 131 before passing through the guide ring 7200 may cross the portion 132 of the fishing line that is moved toward the tip of the fishing rod. Referring to FIG. 35C, due to the wind force F4 or due to the movement of the fishing rod, the looped portion 131 may pass the upper end of the ring support 7300 and then be moved toward the lower end of the ring support 7300. Referring to FIG. 35D, due to the change of wind direction or due to the movement of the fishing rod, the force F5 of returning the fishing line toward the reel acts on the portion 133 of the fishing line that does not enter the guide ring 7200, and the looped portion 131 is moved to the lower end of the ring support 7300 and may be wound on the ring support 7300. In this regard, since the width of the ring support 7300 becomes gradually narrower toward the lower end of the ring support 7300 due to the pair of first lateral end edges 7361 of the ring support 7300, the looped portion 131 is moved to the vicinity of the attachment portion 7100. Therefore, the line tangle portion 134 is formed at a lateral side of the ring support 7300, and the fishing line may be brought into a locked state. Referring to FIG. 35E, the portions 135, 136, 137, 138 of the fishing line may be tightened to the ring support 7300 due to the tension F3 heading toward the tip of the fishing rod. Referring to FIG. 35F, under the situation where the tension F3 continues to act, the portion 136 of the fishing line is moved greatly toward the tip of the fishing rod due to the tension F3, and the portion 135 of the fishing line is tightened most. Thus, the portion 135 of the fishing line becomes a fulcrum, and the portion 137 of the fishing line and the portion 138 of the fishing line may be moved toward the guide ring 7200 by the tension F3. Referring to FIG. 35G, under the situation where the tension F3 continues to act, the portion 137 of the fishing line tangled on the ring support 7300 may climb over the boundary portion 7363 of the lateral end edge of the ring support 7300, and then be moved toward the upper end of the ring support 7300. Next, the portion 138 of the fishing line may climb over the boundary portion 7363 of the lateral end edge of the ring support 7300 and then be moved toward the upper end of the ring support 7300. Referring to FIG. 35H, under the situation where the tension F3 continues to act, the looped portion 131 and the line tangle portion 134 may be moved toward the upper end of the ring support 7300. Referring to FIGS. 35I and 35J, under the situation where the tension F3 continues to act, the looped portion 131 slides toward the upper end of the ring support 7300, and the line tangle portion 134 can be untangled as the looped portion 131 passes the upper end of the ring support 7300.

Due to the Y-shaped bending portion of the ring support 7300, the ring holding portion 7310 is bent with respect to the ring supporting portion 7320 and the ring supporting portion 7320 is bent toward the tip of the fishing rod. Thus, a lower wall surface of the guide ring 7200 is located in the vicinity of the concave portion 1325 which is formed by the Y-shaped bending portion. That is, a lowermost end point of the guide ring 7200 is located below the both end points of the second bending portion 1332. In addition, due to the Y-shaped bending portion, the looped portion 131 cannot enter the concave portion 1325 and is spaced from the concave portion 1325. Therefore, the looped portion 131 may be smoothly slid to the upper end of the ring support 7300 without being caught by the lower wall surface of the guide ring 7200. Further, since the pair of boundary portions 7363 of the lateral end edges of the ring support 7300 are located at or above the both end points of the second bending portion 1332, the portion 137 and the portion 138 of the fishing line shown in FIGS. 35F and 35G can smoothly climb over the boundary portion 7363 and the looped portion 131 can be smoothly moved to the upper end of the ring support 7300.

FIG. 35K shows a fishing line guide according to a comparative example in which the line tangle cannot be untangled. In the ring support shown in FIG. 35K, the boundary portions 7363 of the lateral end edges are located below the both end points of the second bending portion 1332. Therefore, the portion 137 of the fishing line, which is moved while the portion 135 of the fishing line becomes a fulcrum, fails to climb over the boundary portion 7363. If the tension F3 is applied further, the portion 137 of the fishing line and the portion 138 of the fishing line are tightened. Thus, the looped portion 131 cannot be moved toward the upper end of the ring support, and therefore the line tangle of fishing line cannot be untangled.

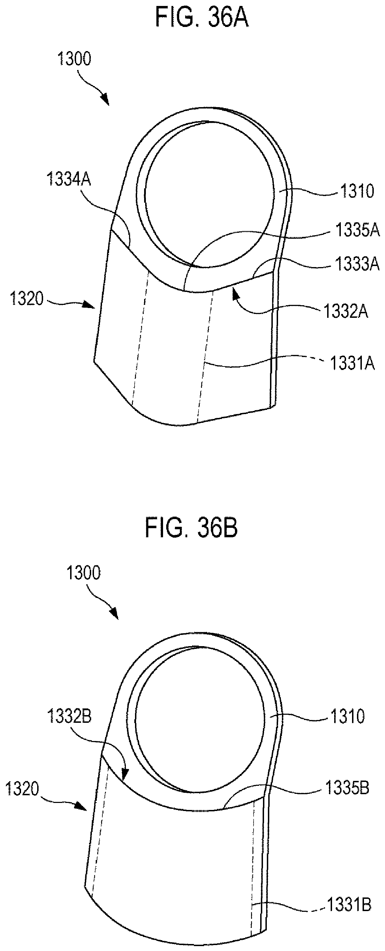

FIGS. 36A to 36C show various examples of the bending portion of the ring support which may be employed in the fishing line guides of the embodiments.

In the ring support 1300 shown in FIG. 36A, the first bending portion 1331A has a relatively broad width, and appears as a broad curved surface on the front surface and the rear surface of the ring supporting portion 1320. The second bending portion 1332A connected to the first bending portion 1331A includes a curved bending portion 1335A located at a center thereof, and a pair of linear bending portions 1333A, 1334A extending from both ends of the curved bending portion 1335A. The curved bending portion 1335A is connected to the first bending portion 1331A. The first bending portion 1331A and the second bending portion 1332A form an approximately Y shape.

In the ring support 1300 shown in FIG. 36B, the second bending portion 1332B is formed in a shape curved convexly in the downward direction. The second bending portion 1332B includes a curved bending portion 1335B that extends approximately throughout the overall length of the second bending portion 1332B. The curved bending portion 1335B is connected to a first bending portion 1331B. The first bending portion 1331B may be formed in the almost entirety of the ring supporting portion 1320, and appears as a broad curved surface on the front surface and the rear surface of the ring supporting portion 1320. When assuming two tangents contacting two points that are on the curved shape of the curved bending portion 1335B and are opposed in the width direction of the ring supporting portion 1320, such two tangents may have the included angle IA1 shown in FIG. 11. Portions, which exist from either end of the second bending portion 1332B by a predetermined length, may be formed as the above-described linear bending portions. The first bending portion 1331B and the second bending portion 1332B form an approximately Y shape.

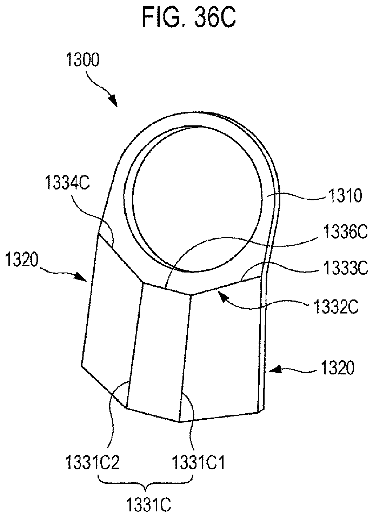

In the ring support 1300 shown in FIG. 36C, a first bending portion 1331C includes a pair of linear bending portions 1331C1, 1331C2. A second bending portion 1332C includes a linear bending portion 1336C located at a center thereof, and a pair of linear bending portion 1333C, 1334C each extending from respective ends of the linear bending portion 1336C. Ends of the linear bending portion 1336C of the second bending portion 1332C are connected to the linear bending portions 1331C1, 1331C2 of the first bending portion 1331C, respectively. The linear bending portions 1333C, 1334C of the second bending portion 1332C may have the included angle IA1 shown in FIG. 11. The linear bending portions 1333C, 1334C extend at an obtuse angle with respect to the first bending portion 1331C from respective connection points between the first bending portion 1331C and the second bending portion 1332C (connection points between the linear bending portions 1331C1, 1331C2 and the linear bending portion 1336C). A portion of the ring supporting portion 1320 is formed flat between the linear bending portions 1331C1, 1331C2 of the first bending portion 1331C. The front and rear surfaces of the ring supporting portion 1320 are divided into three surface regions. The first bending portion 1331C and the second bending portion 1332C meet each other at two locations, and the first bending portion 1331C and the second bending portion 1332C form an approximately Y shape.

The ring supports of the above-described embodiments and the ring supports shown in FIGS. 36A to 36C have a Y-shaped or approximately Y-shaped bending portion therein. Thus, they have an improved strength when compared with the ring support composed of a flat thin plate that does not have a bending portion therein.

In the above-described embodiments, the attachment portion includes the annular body through which the tubular rod passes. In another embodiment, the attachment portion of the fishing line guide may be formed as a structure that has an attachment foot shape and is attached to the outer peripheral surface of the tubular rod. Such an attachment foot may be firmly attached to the outer peripheral surface of the tubular rod by a winding thread, and an adhesive may be applied to the winding thread.

In the above-described embodiments, the ring support includes the first bending portion and the second bending portion connected to the first bending portion. In another embodiment, the ring support may include only the first bending portion. In such an embodiment, the ring supporting portion may be bent with reference to the first bending portion at the first bending angle toward the tip of the fishing rod, and the ring holding portion may extend from the ring supporting portion without being bent.

In another embodiment, the ring support may have only one of the first opening 2351 and the second opening 3352 shown in FIGS. 17 and 23. For example, only the first opening 2351 may be formed in the ring support, or only the second opening 3352 may be formed in the ring support 1300.

The technical idea of the present disclosure has been described heretofore with reference to some embodiments and examples shown in the accompanying drawings. However, it is to be understood that various substitutions, modifications and alterations may be made without departing from the technical idea and scope of the present disclosure that can be understood by those of ordinary skill in the technical field to which the present disclosure pertains. Further, it is to be understood that such substitutions, modifications and alterations fall within the appended claims.

### DESCRIPTION OF REFERENCE SYMBOLS

100 fishing rod, 101 tip of fishing rod, 102 butt of fishing rod, 110 rod body, 113 tubular rod, 116 second alignment marker, 130 fishing line, 1000 fishing line guide, 2000 fishing line guide, 3000 fishing line guide, 4000 fishing line guide, 5000 fishing line guide, 6000 fishing line guide, 7000 fishing line guide, 1100 attachment portion, 7100 attachment portion, 1110 annular body, 7110 annular body, 1115 rear end surface, 3120 upper rib, 3121 rear end surface, 3123 first alignment marker, 3130 lateral rib, 3131 rear end surface, 1200 guide ring, 3200 guide ring, 7200 guide ring, 1300 ring support, 7300 ring support, 1310 ring holding portion, 7310 ring holding portion, 1311 ring holding hole, 3311 ring holding hole, 7311 ring holding hole, 4312 reinforcing flange, 4313 fitting surface, 4314 guide surface, 5315 fitting protrusion, 1320 ring supporting portion, 7320 ring supporting portion, 1331 first bending portion, 1332 second bending portion, 1333 linear bending portion, 1333C linear bending portion, 1334 linear bending portion, 1334C linear bending portion, 1336C linear bending portion, 1335A curved bending portion, 1335B curved bending portion, 1341 work-hardened portion, 1342 work-hardened portion, 2351 first opening, 3352 second opening, 7361 first lateral end edge, 7362 second lateral end edge, 7363 boundary portion, BA1 first bending angle, BA2 second bending angle, CA1 central axis, IA1 included angle, IA2 included angle, P1 center point of second bending portion, P2 both end points of second bending portion, P3 lowermost end point of ring holding hole, BT distance between front end and rear end of ring supporting portion, TD frontward direction, BD rearward direction, UD upward direction, LD downward direction

## Claims

1. A fishing line guide which is attachable to a tubular rod of a fishing rod (100) for guiding a fishing line (130), the fishing line guide comprising:
an attachment portion (1100) composed of a resin material and comprising an annular body (1110) configured to be fitted to an outer peripheral surface of the tubular rod (113);
a guide ring (1200) through which the fishing line (130) can pass; and
a ring support (1300) composed of a metallic thin plate, the ring support being partially coupled to the attachment portion (1100) and supporting the guide ring, wherein
the ring support (1300) comprises a ring holding portion (1310) having a ring holding hole (1311) to which the guide ring (1200) is coupled, the fishing line guide being **characterized in that**:
the ring support (1300) further comprises a ring supporting portion (1320) integrally formed with the ring holding portion and partially embedded in the annular body (1110) of the attachment portion (1100) to be coupled to the attachment portion;
the ring supporting portion (1320) is bent at a first bending angle (BA1) with reference to a first bending portion (1331) which extends to a lower end of the ring supporting portion in a downward direction toward the tubular rod (113) in the ring supporting portion; and
a portion of the ring supporting portion (1320), which is embedded in the annular body (1110), includes a lower portion of the first bending portion (1331).

2. The fishing line guide of claim 1, wherein the first bending angle (BA1) is 120 degrees to 170 degrees.

3. The fishing line guide of claim 1, wherein a distance (BT) between a front end of the ring supporting portion (1320) and a rear end of the ring supporting portion (1320) along a central axis (CA1) of the fishing rod (100), when the fishing line guide is attached to the tubular rod, is 0.5mm to 3mm.

4. The fishing line guide of claim 1, wherein the ring holding portion (1310) is bent with respect to the ring supporting portion (1320) at a second bending angle (BA2) toward a tip of the fishing rod, when the fishing line guide is attached to the tubular rod, with reference to a second bending portion (1332) which becomes a boundary between the ring holding portion (1310) and the ring supporting portion (1320) and is connected to the first bending portion (1331),
wherein the second bending portion (1332) extends from one lateral end of the ring support (1300) to an opposite lateral end of the ring support and is convex toward the lower end of the ring supporting portion (1320), and
wherein a center point (P1) of the second bending portion (1332) is located below both end points (P2) of the second bending portion.

5. The fishing line guide of claim 4, wherein the second bending angle (BA2) is 15 degrees to 20 degrees.

6. The fishing line guide of claim 4, wherein the second bending portion (1332) includes a pair of linear bending portions (1333, 1334) which extend from a connection point between the first bending portion (1331) and the second bending portion (1332) at an obtuse angle with respect to the first bending portion, and
wherein an included angle (IA1) between the pair of linear bending portions (1333, 1334) is 110 degrees to 120 degrees.

7. The fishing line guide of claim 4, wherein the second bending portion (1332B) includes a curved bending portion (1335B) connected to the first bending portion (1331B).

8. The fishing line guide of claim 4, wherein the first bending portion (1331) and the second bending portion (1332) form a Y shape.

9. The fishing line guide of claim 4, wherein the ring support (1300) further comprises a work-hardened portion (1341, 1342) which is formed within the ring support along the first bending portion (1331) and the second bending portion (1332) and has a yield point higher than that of the ring holding portion (1310) and the ring supporting portion (1320).

10. The fishing line guide of claim 4, wherein a lowermost end point (P3) of the ring holding hole (1311) is located below the both end points (P2) of the second bending portion (1332), and
wherein both lateral end edges of the ring supporting portion (1320) are inclined toward each other at an included angle (IA2) of more than zero degree and less than or equal to 30 degrees.

11. The fishing line guide of claim 4, wherein the ring support (7300) comprises:
a pair of first lateral end edges (7361) extending from the attachment portion (7100) in an upward direction and inclined so as to become gradually more away from each other;
a pair of second lateral end edges (7362) respectively extending from the pair of first lateral end edges in the upward direction at an angle different from an inclination angle of the pair of first lateral end edges; and
a pair of boundary portions (7363) each located between each of the pair of first lateral end edges and each of the pair of second lateral end edges, and
wherein the pair of boundary portions (7363) are located at the both end points (P2) of the second bending portion (1332) or above the both end points (P2) of the second bending portion (1332) respectively.

12. The fishing line guide of claim 11, wherein the pair of second lateral end edges (7362) are inclined toward each other at an included angle (IA3) of more than zero degree and less than or equal to 30 degrees.

13. The fishing line guide of claim 1, wherein the ring support (1300) has a pair of first openings (2351) which are located in the ring supporting portion (1320) outside the attachment portion (1100) and are formed to be perforated through the ring supporting portion (1320) symmetrically with respect to the first bending portion (1331).

14. The fishing line guide of claim 1, wherein the ring support (1300) has a pair of second openings (3352) which are located in the ring supporting portion (1320) inside the attachment portion (1100) and are formed to be perforated through the ring supporting portion (1320) symmetrically with respect to the first bending portion (1331), and
wherein the second openings (3352) are filled with the hardened resin material of the attachment portion (1100).

15. The fishing line guide of claim 1, wherein the ring support (1300) further comprises a reinforcing flange (4312) which protrudes from the ring holding portion (1310) and defines the ring holding hole (3311) at an inner peripheral surface of the reinforcing flange.

16. The fishing line guide of claim 15, wherein the inner peripheral surface of the reinforcing flange (4312) comprises:
an annular fitting surface (4313) to which the guide ring (3200) is fitted; and
a guide surface (4314) extending along the fitting surface and curved with respect to the fitting surface, and
wherein the guide ring (3200) is fitted from the guide surface (4314) to the fitting surface (4313).

17. The fishing line guide of claim 15, wherein the reinforcing flange (4312) has a plurality of fitting protrusions (5315) which are formed in the inner peripheral surface of the reinforcing flange and come into contact with an outer peripheral surface of the guide ring (3200), and
wherein the guide ring (3200) is fitted with the fitting protrusions (5315) with a clearance formed between the outer peripheral surface of the guide ring and the inner peripheral surface of the reinforcing flange.

18. The fishing line guide of claim 1, wherein the attachment portion (1100) comprises:
an upper rib (3120) protruding from an upper end of the annular body (1110) in a radially outward direction; and
a pair of lateral ribs (3130) located below a center of the annular body (1110) and protruding in the radially outward direction,
wherein the upper rib (3120) and the pair of lateral ribs (3130) extend to a rear end surface (1115) of the annular body (1110) in a rearward direction toward a butt of the fishing rod , when the fishing line guide is attached to the tubular rod, and
wherein the rear end surface (1115) of the annular body (1110) includes a rear end surface (3121) of the upper rib (3120) and rear end surfaces (3131) of the pair of lateral ribs (3130).

19. The fishing line guide of claim 18, wherein the upper rib (3120) has a width that widens from the rear end surface (3121) of the upper rib along a frontward direction toward the tip of the fishing rod, when the fishing line guide is attached to the tubular rod,.

20. A fishing rod comprising:
a plurality of tubular rods (111, 112, 113, 114, 115);
and
the fishing line guide (1000) of any one of claims 1 to 19, which is attached to one of the tubular rods.

21. The fishing rod of claim 20, wherein the attachment portion (1100) of the fishing line guide (1000) has a first alignment marker (3123) and one of the tubular rods has a second alignment marker (116) aligned with the first alignment marker.

## Patentansprüche

1. Angelschnurführung, die an einer rohrförmigen Rute einer Angelrute (100) zum Führen einer Angelschnur (130) anbringbar ist, wobei die Angelschnurführung Folgendes umfasst:
einen Anbringungsabschnitt (1100), der aus einem Harzmaterial besteht und einen ringförmigen Körper (1110) umfasst, der konfiguriert ist, um an einer äußeren Umfangsoberfläche der rohrförmigen Rute (113) befestigt zu werden;
einen Führungsring (1200), durch den die Angelschnur (130) hindurchlaufen kann; und
eine Ringstütze (1300), der aus einer metallischen dünnen Platte besteht, wobei die Ringstütze teilweise mit dem Anbringungsabschnitt (1100) gekoppelt ist und den Führungsring stützt, wobei die Ringstütze (1300) einen Ringhalteabschnitt (1310) umfasst, der ein Ringhaltloch (1311) aufweist, mit dem der Führungsring (1200) gekoppelt ist, wobei die Angelschnurführung **dadurch gekennzeichnet ist, dass**:
die Ringstütze (1300) ferner einen Ringstützabschnitt (1320) umfasst, der mit dem Ringhalteabschnitt einstückig ausgebildet und teilweise in den ringförmigen Körper (1110) des Anbringungsabschnitts (1100) eingebettet ist, um mit dem Anbringungsabschnitt gekoppelt zu werden;
der Ringstützabschnitt (1320) in einem ersten Biegewinkel (BA1) unter Bezugnahme auf einen ersten Biegeabschnitt (1331) gebogen ist, der sich bis zu einem unteren Ende des Ringstützabschnitts in einer Abwärtsrichtung zu der rohrförmigen Rute (113) hin in dem Ringstützabschnitt erstreckt; und
ein Abschnitt des Ringstützabschnitts (1320), der in den ringförmigen Körper (1110) eingebettet ist, einen unteren Abschnitt des ersten Biegeabschnitts (1331) einschließt.

2. Angelschnurführung nach Anspruch 1, wobei der erste Biegewinkel (BA1) 120 Grad bis 170 Grad beträgt.

3. Angelschnurführung nach Anspruch 1, wobei ein Abstand (BT) zwischen einem vorderen Ende des Ringstützabschnitts (1320) und einem hinteren Ende des Ringstützabschnitts (1320) entlang einer Mittelachse (CA1) der Angelrute (100), wenn die Angelschnurführung an der rohrförmigen Rute angebracht ist, 0,5 mm bis 3 mm bestützt.

4. Angelschnurführung nach Anspruch 1, wobei der Ringhalteabschnitt (1310) hinsichtlich des Ringstützabschnitts (1320) in einem zweiten Biegewinkel (BA2) zu einer Spitze der Angelrute hin gebogen ist, wenn die Angelschnurführung an der rohrförmigen Rute angebracht ist, unter Bezugnahme auf einen zweiten Biegeabschnitt (1332), der eine Grenze zwischen dem Ringhalteabschnitt (1310) und dem Ringstützabschnitt (1320) wird und mit dem ersten Biegeabschnitt (1331) verbunden ist,
wobei sich der zweite Biegeabschnitt (1332) von einem seitlichen Ende der Ringstütze (1300) zu einem gegenüberliegenden seitlichen Ende des Ringstütze erstreckt und zu dem unteren Ende des Ringstützabschnitts (1320) hin konvex ist, und
wobei ein Mittelpunkt (P1) des zweiten Biegeabschnitts (1332) unterhalb beider Endpunkte (P2) des zweiten Biegeabschnitts gelegen ist.

5. Angelschnurführung nach Anspruch 4, wobei der zweite Biegewinkel (BA2) 15 Grad bis 20 Grad beträgt.

6. Angelschnurführung nach Anspruch 4, wobei der zweite Biegeabschnitt (1332) ein Paar linearer Biegeabschnitte (1333, 1334) einschließt, die sich von einem Verbindungspunkt zwischen dem ersten Biegeabschnitt (1331) und dem zweiten Biegeabschnitt (1332) in einem stumpfen Winkel hinsichtlich des ersten Biegeabschnitts erstrecken, und
wobei ein eingeschlossener Winkel (IA1) zwischen dem Paar linearer Biegeabschnitte (1333, 1334) 110 Grad bis 120 Grad beträgt.

7. Angelschnurführung nach Anspruch 4, wobei der zweite Biegeabschnitt (1332B) einen gekrümmten Biegeabschnitt (1335B) einschließt, der mit dem ersten Biegeabschnitt (1331B) verbunden ist.

8. Angelschnurführung nach Anspruch 4, wobei der erste Biegeabschnitt (1331) und der zweite Biegeabschnitt (1332) eine Y-Form ausbilden.

9. Angelschnurführung nach Anspruch 4, wobei die Ringstütze (1300) ferner einen kaltverfestigten Abschnitt (1341, 1342) umfasst, der innerhalb der Ringstütze entlang des ersten Biegeabschnitts (1331) und des zweiten Biegeabschnitts (1332) ausgebildet ist und eine Streckgrenze aufweist, die höher ist als die des Ringhalteabschnitts (1310) und des Ringstützabschnitts (1320).

10. Angelschnurführung nach Anspruch 4, wobei ein unterster Endpunkt (P3) des Ringhaltelochs (1311) unter den beiden Endpunkten (P2) des zweiten Biegeabschnitts (1332) gelegen ist, und
wobei beide seitlichen Endkanten des Ringstützabschnitts (1320) in einem eingeschlossenen Winkel (IA2) von mehr als null Grad und weniger als oder gleich 30 Grad zueinander geneigt sind.

11. Angelschnurführung nach Anspruch 4, wobei die Ringstütze (7300) Folgendes umfasst:
ein Paar erster seitlicher Endkanten (7361), die sich aus dem Anbringungsabschnitt (7100) in einer Aufwärtsrichtung erstrecken und geneigt sind, um allmählich weiter voneinander entfernt zu sein;
ein Paar zweiter seitlicher Endkanten (7362), die sich jeweils aus dem Paar erster seitlicher Endkanten in der Aufwärtsrichtung in einem Winkel erstrecken, der sich von einem Neigungswinkel des Paares erster seitlicher Endkanten unterscheidet; und
ein Paar Grenzabschnitte (7363), die jeweils zwischen jedem des Paares erster seitlicher Endkanten und jedem des Paares zweiter seitlicher Endkanten gelegen sind, und
wobei das Paar Grenzabschnitte (7363) an den beiden Endpunkten (P2) des zweiten Biegeabschnitts (1332) beziehungsweise oberhalb der beiden Endpunkte (P2) des zweiten Biegeabschnitts (1332) gelegen sind.

12. Angelschnurführung nach Anspruch 11, wobei das Paar zweiter seitlicher Endkanten (7362) in einem eingeschlossenen Winkel (IA3) von mehr als null Grad und weniger als oder gleich 30 Grad zueinander geneigt sind.

13. Angelschnurführung nach Anspruch 1, wobei die Ringstütze (1300) ein Paar erster Öffnungen (2351) aufweist, die in dem Ringstützabschnitt (1320) außerhalb des Anbringungsabschnitts (1100) gelegen und ausgebildet sind, um durch den Ringstützabschnitt (1320) hindurch symmetrisch hinsichtlich des ersten Biegeabschnitts (1331) perforiert zu werden.

14. Angelschnurführung nach Anspruch 1, wobei die Ringstütze (1300) ein Paar zweiter Öffnungen (3352) aufweist, die in dem Ringstützabschnitt (1320) innerhalb des Anbringungsabschnitts (1100) gelegen und ausgebildet sind, um durch den Ringstützabschnitt (1320) hindurch symmetrisch hinsichtlich des ersten Biegeabschnitts (1331) perforiert zu werden, und
wobei die zweiten Öffnungen (3352) mit dem gehärteten Harzmaterial des Anbringungsabschnitts (1100) gefüllt sind.

15. Angelschnurführung nach Anspruch 1, wobei die Ringstütze (1300) ferner einen Verstärkungsflansch (4312) umfasst, der aus dem Ringhalteabschnitt (1310) vorspringt und das Ringhalteloch (3311) an einer inneren Umfangsoberfläche des Verstärkungsflansches definiert.

16. Angelschnurführung nach Anspruch 15, wobei die innere Umfangsoberfläche des Verstärkungsflansches (4312) Folgendes umfasst:
eine ringförmige Befestigungsoberfläche (4313), an der der Führungsring (3200) befestigt ist; und
eine Führungsoberfläche (4314), die sich entlang der Befestigungsoberfläche erstreckt und hinsichtlich der Befestigungsoberfläche gekrümmt ist, und
wobei der Führungsring (3200) von der Führungsoberfläche (4314) an die Befestigungsoberfläche (4313) befestigt ist.

17. Angelschnurführung nach Anspruch 15, wobei der Verstärkungsflansch (4312) mehrere Befestigungsvorsprünge (5315) aufweist, die in der inneren Umfangsoberfläche des Verstärkungsflansches ausgebildet sind und mit einer äußeren Umfangsoberfläche des Führungsrings (3200) in Berührung kommen, und
wobei der Führungsring (3200) mit den Befestigungsvorsprüngen (5315) befestigt ist, wobei ein Zwischenraum zwischen der äußeren Umfangsoberfläche des Führungsrings und der inneren Umfangsoberfläche des Verstärkungsflansches ausgebildet ist.

18. Angelschnurführung nach Anspruch 1, wobei der Anbringungsabschnitt (1100) Folgendes umfasst:
eine obere Rippe (3120), die aus einem oberen Ende des ringförmigen Körpers (1110) in einer radialen Auswärtsrichtung vorspringt; und
ein Paar seitlicher Rippen (3130), die unter einer Mitte des ringförmigen Körpers (1110) gelegen sind und in der radialen Auswärtsrichtung vorspringen,
wobei sich die obere Rippe (3120) und das Paar seitlicher Rippen (3130) zu einer hinteren Endoberfläche (1115) des ringförmigen Körpers (1110) in einer Rückwärtsrichtung zu einem hinteren Teil der Angelrute hin erstrecken, wenn die Angelschnurführung an der rohrförmigen Rute angebracht ist, und
wobei die hintere Endoberfläche (1115) des ringförmigen Körpers (1110) eine hintere Endoberfläche (3121) der oberen Rippe (3120) und hintere Endoberflächen (3131) des Paares seitlicher Rippen (3130) einschließt.

19. Angelschnurführung nach Anspruch 18, wobei die obere Rippe (3120) eine Breite aufweist, die sich von der hinteren Endoberfläche (3121) der oberen Rippe entlang einer Vorwärtsrichtung zu der Spitze der Angelrute hin erweitert, wenn die Angelschnurführung an der rohrförmigen Rute angebracht ist.

20. Angelrute, die Folgendes umfasst:
mehrere rohrförmige Ruten (111, 112, 113, 114, 115); und
die Angelschnurführung (1000) nach einem der Ansprüche 1 bis 19, die an einer der rohrförmigen Ruten angebracht ist.

21. Angelrute nach Anspruch 20, wobei der Anbringungsabschnitt (1100) der Angelschnurführung (1000) eine erste Ausrichtungsmarkierung (3123) aufweist und eine der rohrförmigen Ruten eine zweite Ausrichtungsmarkierung (116) aufweist, die an der ersten Ausrichtungsmarkierung ausgerichtet ist.

## Revendications

1. Guide de ligne de pêche qui peut être fixé à une tige tubulaire d'une canne à pêche (100) destiné au guidage d'une ligne de pêche (130), le guide de ligne de pêche comprenant :
une partie de fixation (1100) composée d'un matériau de résine et comprenant un corps annulaire (1110) conçu pour être ajusté sur une surface périphérique externe de la tige tubulaire (113) ;
un anneau de guidage (1200) à travers lequel la ligne de pêche (130) peut passer ; et
un support d'anneau (1300) composé d'une plaque métallique mince, le support d'anneau étant partiellement accouplé à la partie de fixation (1100) et supportant l'anneau de guidage,
le support d'anneau (1300) comprenant une partie de maintien d'anneau (1310) ayant un trou de maintien d'anneau (1311) auquel l'anneau de guidage (1200) est accouplé, le guide de ligne de pêche étant **caractérisé en ce que** :
le support d'anneau (1300) comprend en outre une partie de support d'anneau (1320) formée d'un seul tenant avec la partie de maintien d'anneau et partiellement encastrée dans le corps annulaire (1110) de la partie de fixation (1100) à accoupler à la partie de fixation ;
la partie de support d'anneau (1320) est pliée selon un premier angle de courbure (BA1) par rapport à une première partie de courbure (1331) qui s'étend vers une extrémité inférieure de la partie de support d'anneau dans une direction vers le bas vers la tige tubulaire (113) dans la partie de support d'anneau ; et
une partie de la partie de support d'anneau (1320), qui est encastrée dans le corps annulaire (1110), comporte une partie inférieure de la première partie de courbure (1331).

2. Guide de ligne de pêche selon la revendication 1, le premier angle de courbure (BA1) étant de 120 degrés à 170 degrés.

3. Guide de ligne de pêche selon la revendication 1, une distance (BT) entre une extrémité avant de la partie de support d'anneau (1320) et une extrémité arrière de la partie de support d'anneau (1320) le long d'un axe central (CA1) de la canne à pêche (100), lorsque le guide de ligne de pêche est fixé à la tige tubulaire, étant de 0,5 mm à 3 mm.

4. Guide de ligne de pêche selon la revendication 1, la partie de maintien d'anneau (1310) étant pliée par rapport à la partie de support d'anneau (1320) selon un second angle de courbure (BA2) vers une pointe de la canne à pêche, lorsque le guide de ligne de pêche est fixé à la tige tubulaire, en référence à une seconde partie de courbure (1332) qui devient une limite entre la partie de maintien d'anneau (1310) et la partie de support d'anneau (1320) et est reliée à la première partie de courbure (1331),
la seconde partie de courbure (1332) s'étendant d'une extrémité latérale du support d'anneau (1300) à une extrémité latérale opposée du support d'anneau et étant convexe vers l'extrémité inférieure de la partie de support d'anneau (1320), et
un point central (P1) de la seconde partie de courbure (1332) étant situé en dessous des deux points d'extrémité (P2) de la seconde partie de courbure.

5. Guide de ligne de pêche selon la revendication 4, le second angle de courbure (BA2) étant de 15 degrés à 20 degrés.

6. Guide de ligne de pêche selon la revendication 4, la seconde partie de courbure (1332) comportant une paire de parties de courbure linéaires (1333, 1334) qui s'étendent à partir d'un point de liaison entre la première partie de courbure (1331) et la seconde partie de courbure (1332) selon un angle obtus par rapport à la première partie de courbure, et
un angle inclus (IA1) entre la paire de parties de courbure linéaires (1333, 1334) étant de 110 degrés à 120 degrés.

7. Guide de ligne de pêche selon la revendication 4, la seconde partie de courbure (1332B) comportant une partie de courbure incurvée (1335B) reliée à la première partie de courbure (1331B).

8. Guide de ligne de pêche selon la revendication 4, la première partie de courbure (1331) et la seconde partie de courbure (1332) formant une forme en Y.

9. Guide de ligne de pêche selon la revendication 4, le support d'anneau (1300) comprenant en outre une partie écrouie (1341, 1342) qui est formée à l'intérieur du support d'anneau le long de la première partie de courbure (1331) et de la seconde partie de courbure (1332) et présentant un seuil d'écoulement supérieur à celui de la partie de maintien d'anneau (1310) et de la partie de support d'anneau (1320).

10. Guide de ligne de pêche selon la revendication 4, un point d'extrémité le plus bas (P3) du trou de maintien d'anneau (1311) étant situé en dessous des deux points d'extrémité (P2) de la seconde partie de courbure (1332), et
les deux bords d'extrémité latéraux de la partie de support d'anneau (1320) étant inclinés l'un vers l'autre selon un angle inclus (IA2) supérieur à zéro degré et inférieur ou égal à 30 degrés.

11. Guide de ligne de pêche selon la revendication 4, le support d'anneau (7300) comprenant :
une paire de premiers bords d'extrémité latéraux (7361) s'étendant depuis la partie de fixation (7100) dans une direction vers le haut et inclinés de manière à s'éloigner progressivement l'un de l'autre ;
une paire de seconds bords d'extrémité latéraux (7362) s'étendant respectivement à partir de la paire de premiers bords d'extrémité latéraux dans la direction vers le haut selon un angle différent d'un angle d'inclinaison de la paire de premiers bords d'extrémité latéraux ; et
une paire de parties limites (7363) situées chacune entre chacun de la paire de premiers bords d'extrémité latéraux et chacun de la paire de seconds bords d'extrémité latéraux, et
la paire de parties limites (7363) étant située au niveau des deux points d'extrémité (P2) de la seconde partie de courbure (1332) ou au-dessus des deux points d'extrémité (P2) de la seconde partie de courbure (1332) respectivement.

12. Guide de ligne de pêche selon la revendication 11, la paire de seconds bords d'extrémité latéraux (7362) étant inclinés l'un vers l'autre selon un angle inclus (IA3) de plus de zéro degré et inférieur ou égal à 30 degrés.

13. Guide de ligne de pêche selon la revendication 1, le support d'anneau (1300) ayant une paire de premières ouvertures (2351) qui sont situées dans la partie de support d'anneau (1320) à l'extérieur de la partie de fixation (1100) et sont formées pour être perforées à travers la partie de support d'anneau (1320) symétriquement par rapport à la première partie de courbure (1331).

14. Guide de ligne de pêche selon la revendication 1, le support d'anneau (1300) ayant une paire de secondes ouvertures (3352) qui sont situées dans la partie de support d'anneau (1320) à l'intérieur de la partie de fixation (1100) et sont formées pour être perforées à travers la partie de support d'anneau (1320) symétriquement par rapport à la première partie de courbure (1331), et
les secondes ouvertures (3352) étant remplies avec le matériau de résine durci de la partie de fixation (1100).

15. Guide de ligne de pêche selon la revendication 1, le support d'anneau (1300) comprenant en outre une bride de renfort (4312) qui fait saillie à partir de la partie de maintien d'anneau (1310) et définit le trou de maintien d'anneau (3311) au niveau d'une surface périphérique interne de la bride de renfort.

16. Guide de ligne de pêche selon la revendication 15, la surface périphérique interne de la bride de renfort (4312) comprenant :
une surface d'ajustement annulaire (4313) sur laquelle l'anneau de guidage (3200) est ajusté ; et
une surface de guidage (4314) s'étendant le long de la surface d'ajustement et étant incurvée par rapport à la surface d'ajustement, et
l'anneau de guidage (3200) étant ajusté de la surface de guidage (4314) à la surface d'ajustement (4313).

17. Guide de ligne de pêche selon la revendication 15, la bride de renfort (4312) ayant une pluralité de saillies d'ajustement (5315) qui sont formées dans la surface périphérique interne de la bride de renfort et entrent en contact avec une surface périphérique externe de l'anneau de guidage (3200), et
l'anneau de guidage (3200) étant ajusté avec les saillies d'ajustement (5315) avec un jeu formé entre la surface périphérique externe de l'anneau de guidage et la surface périphérique interne de la bride de renfort.

18. Guide de ligne de pêche selon la revendication 1, la partie de fixation (1100) comprenant :
une nervure supérieure (3120) faisant saillie depuis une extrémité supérieure du corps annulaire (1110) dans une direction radialement vers l'extérieur ; et
une paire de nervures latérales (3130) situées en dessous d'un centre du corps annulaire (1110) et faisant saillie dans la direction radialement vers l'extérieur,
la nervure supérieure (3120) et la paire de nervures latérales (3130) s'étendant vers une surface d'extrémité arrière (1115) du corps annulaire (1110) dans une direction vers l'arrière vers un bout de la canne à pêche, lorsque le guide de ligne de pêche est fixé à la tige tubulaire, et
la surface d'extrémité arrière (1115) du corps annulaire (1110) comportant une surface d'extrémité arrière (3121) de la nervure supérieure (3120) et des surfaces d'extrémité arrière (3131) de la paire de nervures latérales (3130).

19. Guide de ligne de pêche selon la revendication 18, la nervure supérieure (3120) ayant une largeur qui s'élargit à partir de la surface d'extrémité arrière (3121) de la nervure supérieure le long d'une direction vers l'avant vers la pointe de la canne à pêche, lorsque le guide de ligne de pêche est fixé à la tige tubulaire.

20. Canne à pêche comprenant :
une pluralité de tiges tubulaires (111, 112, 113, 114, 115) ;
et
le guide de ligne de pêche (1000) selon l'une quelconque des revendications 1 à 19, qui est fixé à l'une des tiges tubulaires.

21. Canne à pêche selon la revendication 20, la partie de fixation (1100) du guide de ligne de pêche (1000) ayant un premier marqueur d'alignement (3123) et l'une des tiges tubulaires ayant un second marqueur d'alignement (116) aligné sur le premier marqueur d'alignement.
